# EUROPEAN PATENT SPECIFICATION

(11) **EP 2 162 488 B1**
(45) Date of publication and mention of the grant of the patent: **05.09.2012**
(21) Application number: 08844989.7
(22) Date of filing: 03.07.2008
(51) Int. Cl.: C08K 5/01, C08K 5/05, D01F 1/10, D01F 6/16, C08K 5/00, D01F 6/18, D01F 6/36, D01F 6/40

(54) **ACRYLIC FIBER WITH MODIFIED PROPERTY AND A PROCESS FOR MAKING THEREFOR**
ACRYLFASER MIT VERÄNDERTEN EIGENSCHAFTEN UND VERFAHREN ZU IHRER HERSTELLUNG
FIBRE ACRYLIQUE AYANT UNE PROPRIÉTÉ MODIFIÉE ET SON PROCÉDÉ DE FABRICATION

(30) Priority: 03.07.2007 IN MU12592007
(43) Date of publication of application: 17.03.2010
(73) Proprietor: Aditya Birla Science & Technology CO. LTD., Mumbai 400 025, Maharashtra (IN)
(72) Inventor: PREETI, Lodha, Mumbai 400 025, Maharashtra (IN); BIR, Kapoor, Mumbai 400 025, Maharashtra (IN); TUSHAR, Mahajan, Mumbai 400 025, Maharashtra (IN)
(74) Representative: Isarpatent
(86) International application number: PCT/IN2008/000423
(87) International publication number: WO 2009/057135

(56) References cited:
- WO-A1-00/26447
- WO-A1-03/027365
- WO-A2-2005/017247
- WO-A2-2006/098851
- US-A- 4 756 958

## Description

### Field of the invention

The present invention relates to textile fibers.

### Background of the invention

The term "fiber" or "textile fiber" means a substance which is capable of being spun into a yarn or made into a fabric by bonding or by interlacing in a variety of methods including weaving, knitting, braiding, felting, twisting, or webbing, and which is the basic structural element of textile products.

Fibers are classified on the basis of their length such as short fibers or staple fiber and long fibers or filament fiber. The fibers can also be classified on the basis of their origin such as natural fibers and man-made fibers. The term natural fibers means any fiber that exists as such in the natural state e.g. vegetable fibers or wood fibers. The other type of fibers is obtained from chemical substances. These are called man made fibers. They are polyester, nylon, acrylic (cashmilon) and the like.

For centuries, mankind has relied upon various plants and animals to provide raw materials for fabrics and clothing. In recent times, the industrialization and scientific advancement has provided several improved materials having far superior properties, particularly suitable for clothing.

Acrylic fibers are synthetic fibers containing at least 85% of acrylonitrile monomer. The acrylic fibers are prepared from a polymer Polyacrylonitrile which is obtained by free radical polymerisation with an average molecular weight of 100,000. Typical properties of acrylic fibers include resistance to moths, oils, and chemicals. Furthermore, they are also resistant to deterioration from sunlight exposure.

The process steps involved in the preparation of Acrylic fibers are as follows: The Polyacrylonitrile is dissolved in solvents like N,N-dimethylformamide or aqueous sodium thiocyanate. Then it is metered through a multi-hole spinnerette and the resultant filaments are coagulated in an aqueous solution of the same solvent. The resultant filaments are washed, stretched, dried and crimped to obtain final acrylic fibers. Acrylic fibers are typically produced in a range of deniers from 1 to 15.

Acrylic is lightweight, soft, and warm, with a wool-like feel. It dyes very well and has excellent colorfastness. It is resilient, retains its shape, and resists shrinkage and wrinkles. Acrylic fibers are commonly used in sweaters, hand-knitting yams, rugs, awnings, boat covers, and beanies; the fiber is also used as a precursor for carbon fiber.

From the spun or filament yam, fabric is formed by knitting or weaving operations. Knitted fabrics can be made by using hooked needles to interlock one or more sets of yarns through a set of loops. The loops may be either loosely or closely constructed, depending on the purpose of the fabric. Knitted fabrics can be used for hosiery, underwear, sweaters, slacks, suits, coats, rugs and other home furnishings. Knitting is performed using either weft or warp processes.

Some typical preparations that are involved in the weaving operations are warping, slashing or sizing. Sizing agents are added to the yarn by solution or pad/dry techniques. Differences in raw materials, processing chemicals, fiber diameter, post treatments and blend ratios can be manipulated to produce a fiber having customized properties suitable for desired application. It is often desired that the acrylic fabrics possess typical properties such as thermal stability, ability to retain perfumes, antibacterial properties and the like. These properties are essential in several industrial as well as household applications. There has been a considerable interest in developing such materials. In order to impart various desirable properties to the fabric as mentioned above to the fabric, several additives are added. Such additives include antimicrobial agents, deodorizing agents, antistatic agents, perfumes. Besides such specific additives, generic additives for improving overall quality of the fabric, such as sizing agents, additives for increasing yarn softness and pliability are also added.

### Prior Art:

WO2008030648 discloses a temperature regulating, polymer containing fabric and a suspension formulation used in preparation of such fibers. The suspension comprises a solvent and plurality of microcapsules containing phase-change material. The suspension is used for incorporating the microcapsules in the fabric. The microcapsules comprise a shell composed of acrylic acid and their derivatives and a core which is composed of a phase change material having a latent heat in a range between 80 J/g and 400 J/gm and a transition temperature in the range of 20°C-50°C.

An encapsulated phase change material comprising: a hollow shell defining an internal cavity; and a phase change composition positioned in the internal cavity is described and claimed in United States Patent No. 6,689,466. The phase change composition comprises a phase change material and a thermal stabilizer. Said composition is used or incorporated in a variety of processes e.g., melt spinning processes, extrusion processes, injection molding processes to form articles having enhanced reversible thermal properties.

United States Patent Application no. 20070026228 discloses cellulosic fibers having enhanced reversible thermal properties and applications of such cellulosic fibers. The cellulosic fibers include a fiber body including a cellulosic material and a set of microcapsules dispersed in the cellulosic material. The set of microcapsules contain a phase change material having a latent heat of at least 40 J/g and a transition temperature in the range of 0⁰C-IOO⁰C. The phase change material provides thermal regulation based on absorption and release of the latent heat at the transition temperature.

US 5985301 discloses a process of producing an antibacterial fiber product which involves the method step of solvent spinning for incorporating an inorganic antibacterial silver in the cellulose fiber during its preparation. Another US patent 5405644 discloses a similar process employing inorganic antimicrobial agents which additionally involves the use of discoloring inhibitive agent for preventing possible discoloration of the fabric.

Another method of imparting multiple properties such as oil-repellency, soil-releasing properties and anti-bacterial property to the fabric is disclosed in US 5968599 which involves dipping the mixed or blended fabric in treating solution comprising the antimicrobial constituent like 1 to 10% weight of phenolic antibacterial agent.

The process as disclosed in US 6368361 involves contacting and immersing the fiber in an aqueous phase containing a cationic surfactant with a quaternary ammonium salt group, a water-soluble protein, and an alkaline compound are dissolved. The fiber is then separated from the aqueous phase and immersed in another aqueous phase containing tea polyphenol which is an antimicrobial agent.

A two-stage process comprising a first stage treatment with a water soluble salt of a transition metal and an alkali and a second stage treatment with a solution of a bisbiguanide compound, thereby forming a bond between the cellulose fibers, the transition metal and the bisbiguanide compound is described in US patent 5856248 for improving the properties of the cellulosic fiber.

US Patent 4,784,909 discloses an anti-fungus, deodorant fiber material obtained by blending two types of fibers containing different antimicrobial constituents.

US Patent 5652049 discloses a composite non-woven fabric comprising: a first non-woven web layer comprising antibacterial fibers and a second non-woven web layer disposed superposedly adjacent the first web layer.

A composite textile fabric involving a blend of two fabric layers wherein one of the fabric layers exhibits antimicrobial properties is disclosed in US Patent 6194332. Similarly a yarn comprising plurality of fibers with different properties is disclosed in US patent Application 20070148449.

US Patent 5707736 discloses material like fabric, yarn which contains releasable anti-microbial agent which is released when the material is brought in contact with moist surface. The process involves the use of a water soluble amine salt antimicrobial agent.

US patent 6436419 discloses a process that involves dyeing a polymer with an acid dye to form a dye coated polymer, and attaching an antimicrobial agent like quaternary ammonium salt, thereby making said polymer antimicrobial.

U.S. patent application 20040247653 discloses a process of preparing an antimicrobial and antiviral polymeric material which involves embedding microscopic water insoluble powder particles of ionic copper oxide.

US patent 6712121 discloses a method for forming an antimicrobially-treated fabric, which involves preparation of antimicrobially-treated cellulosic fibrous material and hydraulically entangling such material with a non-woven substrate followed by drying.

The process as described in US Patent Application 20070006391 involves the use of metal(copper, silver, gold, tin, zinc )complexed with a complexing polymer, as an antimicrobial agent. The antimicrobial composition that is used as an antimicrobial constituent does not contain surfactants.

Cellulose fibers and products made there from specifically treated to absorb body secretions are disclosed in US Patent 5856248. The two stage process as described in said US patent involves chemical treatment of the cellulose fibers with a water soluble salt of transition metal alkali and chlorhexidine.

A yarn comprising plurality of metal coated fibers with different properties such as anti-static, anti-odor, and anti-microbial properties is disclosed in US patent Application 20070148449.

US 7012053 discloses a process for producing treated fabric which involves application of composition, comprising fabric care additive, perfume, color restoring agent and antimicrobial agent by means of spraying, soaking or dipping.

Another US 6670317 discloses process of applying fabric care composition which involves contacting fibers with composition comprising lipophilic fluid and perfume.

US 5656333 discloses a method of producing an absorbent nonwoven article which comprises coating of fibers with binder containing colorants, softeners, fragrances, fillers and bactericidal agents.

US 6080208 discloses a method for increasing the sun protection factor of the textile material by treating fiber material with the disclosed compound in specific concentration with the addition of other additives such as fluorescent whitening agent , perfume, colouring dye, opacifier, bactericide, fabric care ingredient, antigelling agent and corrosion inhibitor.

A process for producing deodorizing fibers comprising contacting fiber with a colloidal solution of copper hydroxide and/or zinc hydroxide is disclosed in US 5049159.

US 6335075 discloses a multilayer carpet having a deodorizing function. Deodorant is applied by spraying or foaming on one of the layers while it is kneaded on the other layers.

Another method of imparting multiple properties to the fabric is disclosed in US 6806213 which involves incorporation of aqueous solution comprising fragrance material, moisturizing agent and surfactant into the fiber.

WO 2003/027365 A1 describes a multi-component fibre with enhanced reversible thermal properties comprising a fibre body formed from elongated members, i.e. cellulosic or acrylic polymers comprising a dispersed temperature regulating material, wherein the phase change material optionally comprising a hydrocarbon, is present in microcapsules.

WO 2006/098851 describes polymeric composites and methods of manufacturing polymeric composites wherein a set of microcapsules containing a phase change material are mixed with a dispersing polymeric material to form a first blend. The first blend is processed to form a polymeric composite. The polymeric composite can be formed in a variety of shapes and can be used in various articles where a thermal regulating property is desired.

Earlier known compositions used in preparation of property-modified fabrics such as with thermoregulatory properties, antimicrobial properties, and perfumed properties mainly involved conventional methods like spraying, solvent spinning the antimicrobial constituents on the fabric or comprise making discrete microcapsules with shells which in turn contain the phase agents with or without the stabilizers. However, such compositions and methods employing them suffer from several disadvantages which include adverse effects on the tensile strength of the fiber, change in visual appearance of the fabric, increased time lag for adapting with the changing temperature, decreased sensitivity of the phase changing agent on account of encapsulation. There is thus felt a need for a process of incorporating additives to fabric which overcomes these shortcomings.

### Objects of the Invention:

It is an object of this invention to provide property-modified acrylic products, wherein at least one property modifying constituent is incorporated into the body of the fiber.

Another object of this invention is to provide a process of incorporating thermoregulatory constituents into acrylic fibers which ensures uniform distribution of the thermoregulatory constituent throughout the fiber length.

Yet another object of this invention is to provide thermoregulatory acrylic fibers wherein the thermoregulatory constituents are retained in the acrylic product over a prolonged period of time.

Yet another object of this invention is to provide a process of incorporating thermoregulatory constituents to acrylic fibers which does not affect the feel and texture of the fabric.

Still another object of this invention is to provide a process of incorporating thermoregulatory constituents to acrylic fibers such that inherent properties of the acrylic fibers such as fiber strength, linear density, tenacity, heat resistance, dyeability and drying properties are not altered.

It is another object of this invention to provide antimicrobial acrylic fibers, wherein at least one antimicrobial constituent is incorporated in the body of the fiber.

Another object of this invention is to provide a process of incorporating antimicrobial constituents into acrylic fibers which ensures uniform distribution of the antimicrobial constituent throughout the fiber length.

Yet another object of this invention is to provide antimicrobial acrylic fibers wherein the antimicrobial constituents are retained in the acrylic product over a prolonged period of time.

Yet another object of this invention is to provide a process of incorporating antimicrobial constituents to acrylic fibers which does not alter the feel and texture of the fabric.

Still another object of this invention is to provide a process of incorporating antimicrobial constituents to acrylic fibers such that inherent properties of the acrylic fibers such as fiber strength, linear density, tenacity, heat resistance, dyeability and drying properties are not altered.

It is yet another object of this invention to provide perfumed acrylic fibers, wherein at least one perfume constituent is incorporated in the body of the fiber.

Another object of this invention is to provide a process of incorporating perfume constituents into acrylic fibers which ensures uniform distribution of the perfume constituent throughout the fiber length.

Yet another object of this invention is to provide perfumed acrylic fibers wherein the perfume constituents are retained in the acrylic product over a prolonged period of time.

Yet another object of this invention is to provide a process of incorporating perfume constituents to acrylic fibers which does not alter the feel and texture of the fabric.

Still another object of this invention is to provide a process of incorporating perfume constituents to acrylic fibers such that inherent properties of the acrylic fibers such as fiber strength, linear density, tenacity, heat resistance, dyeability and drying properties are not altered.

### Definitions:

As used in the present specification, the following words and phrases are generally intended to have the meanings as set forth below, except to the extent that the context in which they are used indicates otherwise.

"Phase-change agent" means a substance having the ability to releases or absorbs heat whenever it undergoes change in its physical state.

Enthalpy means heat content or total heat, including both sensible and latent heat.

"Latent heat" means the heat energy needed to change the state of a substance (ie: from a solid to a liquid) but not it's temperature.

"Flash point" means the temperature at which a substance gives off a sufficient amount of vapors to form an ignitable mixture with air.

"Non-aqueous phase" means a melted mixture in liquid state which is water insoluble.

"Aqueous phase" means substance dissolved in water.

"Acrylic polymer" means regular acrylic and modacrylic polymers, containing at least 35% acrylonitrile as a monomer for modacrylic and 85% for regular acrylic polymer. The other comonomers can be methylacrylate, ethyl vinyl ether, vinyl bromide, vinyl chloride, vinyledene chloride, vinyl acetate, vinyl sulfonic acid, itaconic acid, and/or methylmethacrylate and sulfonated monomers such as sodium styrene sulfonate, sodium methallyl sulfonate, sodium sulfophenyl methallyl ether.

"Acrylic Polymer dope" means an intermediate material in the manufacture of acrylic products that is used for preparation of fibers.

"Preform mass" means an intermediate material suitable for making fibers.

"Perfume constituent for example citrus musk" means a group of compounds which when mixed together provides the scent referred to commercially as citrus musk.

### Summary of the Invention:

- In accordance with this invention there is provided a property-modified acrylic formulation meant for manufacture of acrylic products comprising:
- at least one water insoluble constituent, in the form of micro-reservoirs having an average mean size of 5 nm to 2000 nm, said constituent selected from the group consisting of thermoregulatory constituents in an amount of 0.01 to 7%, antimicrobial constituents in an amount of 0.001 to 3.5% and perfume constituents in an amount of 0.001 to 3.5%, said amounts being expressed with respect to the total mass of the formulation;

- at least one water soluble nonionic surfactant having HLB value in the range of 9 to 40,said surfactant being in the range of 0.001 to 3 % of the mass of the formulation,
- acrylic polymer in the range of 1 to 15% of the mass of the formulation,
- a solvent for polyacrylonitrile in the range of 20 to 60% of the mass of the formulation;
- water in the range of 5 % to 60 % of the mass of the formulation, and
- in the case when the water insoluble constituent is an antimicrobial constituent or a perfume constituent, at least one non-aqueous solvent in the range of 0.01 to 7% of the mass of the formulation.

Typically, the property modified formulation is a thermoregulatory formulation.

Therefore, in the embodiment where the formulation is a thermoregulatory formulation, the formulation comprises additionally
at least one non-water-soluble thermoregulatory constituent having a melting point lying in a predetermined range of temperature said constituent being in the range of about 0.01 1 to 7% of the mass of the formulation,
■ at least one water soluble nonionic surfactant having HLB value in the range of 9 to 40,said surfactant being in the range of 0.001 to 35 % of the mass of the formulation.

Typically, the thermoregulatory constituent is at least one selected from a group consisting of nonadecane, eicosane, heptadecane, octadecane, hexadecane, pentadecane decyl alcohol, lauryl alcohol and myristyl alcohol.

In accordance with one aspect of the invention, the thermoregulatory constituent, the solvent and the surfactant are processed to form micro-reservoirs which are embedded into the body of the formulation.

The invention also extends to a thermoregulatory acrylic fiber, yarn and fabric manufactured from a formulation in accordance with this invention.

In accordance with this invention there is also provided a process for preparation of a thermoregulatory acrylic formulation meant for manufacture of acrylic products comprising the following steps:
- selecting a non-water-soluble thermoregulatory constituent having a melting point lying in a predetermined range and heating said constituent upto 95⁰C to form a non-aqueous phase ;
- dissolving and stirring a surfactant, optionally with a co-surfactant, a solvent for polyacrylonitrile in water to obtain an aqueous phase;
- heating the aqueous phase;
- mixing the aqueous phase with the non-aqueous phase in liquid state to form an admixture, and homogenizing to obtain a micro-emulsion;
- mixing the micro-emulsion with an acrylic polymer solution in a solvent and water and further homogenizing and dispersing the micro-emulsion to obtain a preform mass wherein the thermoregulatory constituent is in the form of evenly dispersed micro-reservoirs.

In accordance with another embodiment of this invention, the property modified formulation is an antimicrobial formulation.

In the embodiment now of an antimicrobial formulation, the formulation typically comprises:
■ at least one non-aqueous solvent in the range of about 0.01 to 7% of the mass of the formulation,
■ at least one water insoluble antimicrobial constituent soluble said solvent, in the range of about 0.001 to 3.5% of the mass of the formulation ,
■ at least one water soluble nonionic surfactant having HLB value in the range of 9 to 40, in the range of 0.001 to 3% of the mass of the formulation,
■ solvent for acrylic polymer in the range of 20 to 60% of the mass of the formulation,
acrylic polymer in the range of about 1 to 15% of the mass of the formulation, and
■ water in the range of about 5% to 60 % with respect to the mass of the formulation.

Typically, the antimicrobial constituent is at least one selected from a group consisting of 2-Methyl-4-isothiazolin-3-one, water, Phenoxyethanol Benzoic acid, 4-Hydroxy-methyl ester, Hydroxy-benzoic acid and propyl ester), o- (2-naphthyl) methyl (3-methylphenyl) thiocarbamate, 5-chloro-2-(2,4-dichlorophenoxy)phenol,4,5-dichloro-n-octyl-4-isothiazoline-3-one[DCOIT] 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

In accordance with one aspect of the invention, the antimicrobial constituent, the solvent and the surfactant are processed to form micro-reservoirs which are embedded into the body of the formulation.

The invention also extends to an antimicrobial acrylic fiber, yarn and fabric manufactured from a formulation in accordance with this invention.

In accordance with this invention there is also provided a process for preparation of an antimicrobial acrylic formulation meant for manufacture of acrylic products comprising the following steps:
■ admixing a water-insoluble antimicrobial constituent with a non-aqueous solvent, to form a non-aqueous phase;
■ heating the non-aqueous phase upto 95°C;
■ dissolving and stirring a surfactant, optionally with a co-surfactant, a solvent for acrylic polymer in water to obtain an aqueous phase;
■ heating the aqueous phase;
■ mixing the aqueous phase with the non-aqueous phase in liquid state to form an admixture, and homogenizing to obtain a micro-emulsion;
■ mixing the micro-emulsion with an acrylic polymer solution in a solvent and water and further homogenizing and dispersing the micro-emulsion to obtain a polymer dope wherein the antimicrobial constituent is embedded in evenly dispersed micro-reservoirs.

In accordance with yet another embodiment of this invention, the property modified formulation is a perfumed formulation.

In the embodiment now of a perfumed formulation, the formulation typically comprises:
■ at least one non-aqueous solvent in the range of about 0.01 to 7% of the mass of the formulation,
■ at least one water insoluble perfume constituent soluble said solvent, in the range of about 0.001 to 3.5% of the mass of the formulation ,
■ at least one water soluble nonionic surfactant having HLB value in the range of 9 to 40, in the range of 0.001 to 3% of the mass of the formulation,
■ a solvent for polyacrylonitrile in the range of 20 to 60% of the mass of the formulation,
■ acrylic polymer in the range of about 1 to 15% of the mass of the formulation, and
■ water in the range of about 5% to 60 % with respect to the mass of the formulation.

Typically, the perfume constituent is at least one selected from a group consisting of citrus musk, floral woody, citrus musk woody, fresh bouquet, musk ,floral musk, cedarwood oil, sandalwood oil, lemon oil, orange oil, rose oil, jasmine oil and lavender oil.

Typically, the surfactant is at least one non-ionic or anionic surfactant selected from a group of non-ionic or anionic surfactants consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol.

Typically, the solvent for antimicrobial constituent and the perfumed constituent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 - C30 aliphatic alcohols ,C4 -C30 saturated hydrocarbons, C₄ -C₃₀ monounsaturated hydrocarbons, natural oils and mineral oil paraffins. Typically, the surfactant is at least one non-ionic surfactant selected from a group of non-ionic surfactants consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol.

Typically, the alkyl phenoxy ethoxylated non-ionic surfactant is at least one selected from a group consisting of Polyoxyethylene(8) isooctylphenyl ether, Nonylphenol polyethylene glycol ether, Polyoxyethylene(9) nonylphenyl ether, Polyoxyethylene(IO) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(IOO) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) ( nonylphenol 9.5-mole ethoxylate), Surfonic N-95(Poly (oxy-1, 2-ethanediyl), alpha- (nonyl phenyl)-omega-hydroxyl-glycol ether) ( nonylphenol 9.5-mole ethoxylate), Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300( nonylphenol 30-mole ethoxylate), Surfonic N-400 nonylphenol 40-mole ethoxylate, Surfonic LF-7 (Alkyl polyoxyalkylene ether), Surfonic LF- 17 (ethoxylated and propoxylated linear primary 12-14 carbon number alcohol), Igepal CO-630 (nonylphenoxy poly(ethyleneoxy)ethanol,branched), Surfonic DNP-40 (dinonylphenol ethoxylate glycol ether).

In accordance with one preferred embodiment of the invention, the HLB value of the surfactant is between 16 and 40.

Typically, the alkali used in the formulation is sodium hydroxide. Typically, the alkalinity of the formulation is in the range of about 5% to 6% , preferably 5.6%.

In accordance with one aspect of the invention, the perfume constituent, the solvent and the surfactant are processed to form micro- reservoirs which are embedded into the body of the formulation.

Typically, the average mean size of the micro-reservoir is in the range of 5 nm to 2000 nm.

The invention also extends to a perfume acrylic fiber, yarn and fabric manufactured from a formulation in accordance with this invention.

In accordance with this invention there is also provided a process for preparation of a perfumed acrylic formulation meant for manufacture of acrylic products comprising the following steps:
- admixing a water-insoluble perfume constituent with a non-aqueous solvent, to form a nonaqueous phase ;
- heating the non-aqueous phase to a temperature in the range of 25°C to 95°C;
- dissolving and stirring a surfactant, optionally with a co-surfactant, a solvent for acrylic polymer in water to obtain an aqueous phase;
- heating the aqueous phase;
- mixing the aqueous phase with the non-aqueous phase in liquid state to form an admixture, and homogenizing to obtain a micro-emulsion;
- mixing the micro-emulsion with an acrylic polymer solution in a solvent and water and further homogenizing and dispersing the micro-emulsion to obtain a polymer dope wherein the perfume constituent is embedded in evenly dispersed micro-reservoirs.

Typically, the pH of the aqueous phase is in the range of 7 to 13.

Typically, the amount of non-aqueous phase in the micro-emulsion is in the range of 0.1 to 40% of the mass of the micro-emulsion.

Typically, the amount of surfactant in the micro-emulsion is in the range of 0.1 to 20% of the mass of the micro-emulsion.

Typically, the proportion of perfume constituent in the acrylic product is in the range of 0.001 to 20% with respect to the mass of the acrylic product.

Typically, the solvent for polyacrylonitrile is at least one selected from a group consisting of sodium thiocyanate, dimethyl formamide, dimethyl acetamide, dimethyl sulfoxide, ethylene carbonate, aqueous zinc chloride and aqueous nitric acid. The polymer percentages in the acrylic dope will vary depending on the solvent. For dimethyl formamide, acrylic polymer concentration soluble in polymer dope is as high as 28-32%; for dimethyl acetamide, it is as high as 22-27%; for dimethyl sulfoxide, it is as high as 20-25%; for ethylene carbonate, it is as high as 15-18%, for aqueous nitric acid, it is as high as 8-12% and for zinc chloride, it is as high as 8-12%. For Sodium thiocyanate as a solvent, acrylic polymer concentration is as high as 10-15%.

### Brief Description of the accompanying Drawings:

The invention will be described in detail with reference to the accompanying drawings.

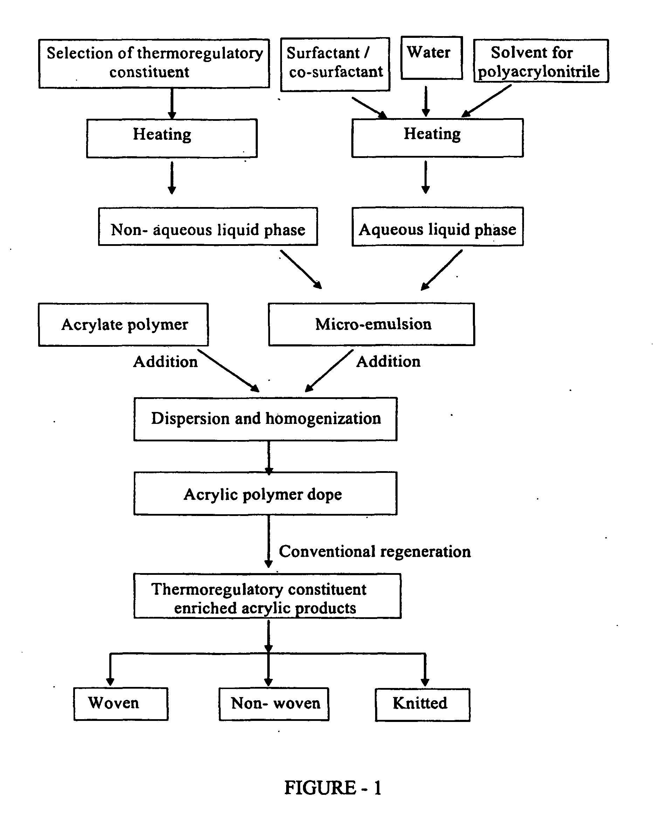

In the accompanying drawing, Figure 1 illustrates the block diagram showing the method steps involved in the process of making a thermoregulatory acrylic fiber in accordance with this invention.

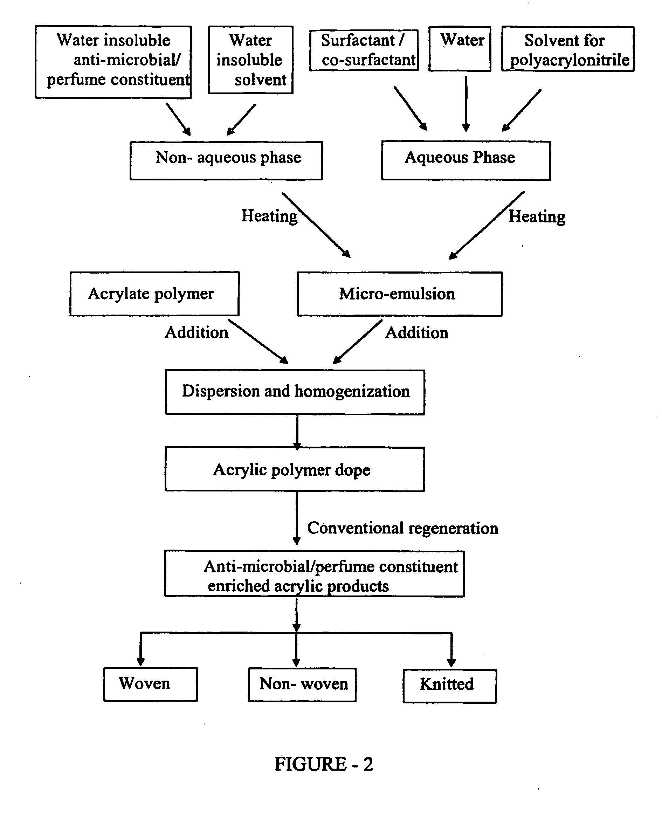

In the accompanying drawing, Figure 2 illustrates the block diagram showing the method steps involved in the process of making an antimicrobial or perfumed acrylic fiber in accordance with this invention.

Figure 3 illustrates the cross-sectional view of thermoregulatory acrylic fibers prepared in accordance with this invention which shows uniform distribution of micro-reservoirs of thermoregulatory constituents entrapped across the length of the fibers.

Figure 4 illustrates the cross-sectional view of antimicrobial acrylic fibers prepared in accordance with this invention which shows uniform distribution of micro-reservoirs of antimicrobial constituents entrapped across the length of the fibers.

Figure 5 illustrates the cross-sectional view of perfumed acrylic fibers prepared in accordance with this invention which shows uniform distribution of micro-reservoirs of perfumed constituents entrapped across the length of the fibers.

### Detailed Description:

Acrylic fibers are viable manufactured fibers. The reason behind the most widespread use of these fibers lies in their versatility. Furthermore, these fibers also have peculiar ability to blend easily with many fibers which makes them the fibers of choice.

Though fibers and fabrics made from them have many desirable properties, oftentimes, consumers expect performance characteristics beyond those for which fibers were designed. In order to meet with these increasing expectations, various thermoregulatory constituents are incorporated in the acrylic fibers. There has been a considerable interest in developing such materials.

The additional desirable properties of acrylic fibers which has enormous demand are "thermoregulatory activity", "antimicrobial activity", and "perfumed fibers".

Thermoregulatory constituents improve the thermal insulation of the acrylic fibers during changes in environmental temperature conditions. Thermoregulatory constituents are phase change materials which improve the thermal performance of clothing by absorbing or releasing heat when subjected to heating or cooling during a phase change.

Thermoregulatory acrylic product abates the transient effect on a human body's heat loss when the person wearing such fabric is exposed to temperature swings resulting from change in environmental conditions.

Thermoregulatory constituents that are used include nonadecane, eicosane, heptadecane, octadecane, hexadecane, pentadecane and myristyl alcohol.

Thermoregulatory ability of the thermoregulatory constituents is governed by several factors which include melting point, quantity of the thermoregulatory constituent in the fabric, different combinations and proportions in which the thermoregulatory constituents are blended together, type of the polymer used in the fabric, thickness of the fabric, distribution of the thermoregulatory constituent in the fabric, and the process used for incorporating the thermoregulatory constituent in the fabric.

Specific thermoformable properties of the fabric with respect to the desired temperature zones are adjusted by careful blend of the thermoregulatory constituents in specific proportions. The thermoregulatory constituent is selected such that it has a melting point that falls within the range of temperature in which thermal regulation is desired to be achieved. Thus, if thermal regulation is desired in the range of 21 -30 ⁰C, then the melting point of the thermoregulatory constituent must fall within this range. Again if the fabric is to be used in climatic regions, where regulation is desired below 20 °C, then the thermoregulatory constituent having melting point below 20 °C is used. The thermoregulatory acrylic fabric acts as a transient thermal barrier by protecting the wearer of this fabric from the effects of cold or hot environments. When such thermoregulatory acrylic fabric is subjected to heating from the sun or a hot environment, it will absorb transient heat as it changes phase from solid to liquid, and it will prevent the temperature of the fabric from rising by keeping it constant at the melting point temperature of the thermoregulatory constituent. Once thermoregulatory constituent has completely melted, its transient effect will cease and the temperature of the fabric will rise. In a similar manner, when a thermoregulatory fabric is subjected to a cold environment where the temperature is below its crystallization point, it will interrupt the cooling effect of the fabric structure by changing phase from liquid to solid, and the temperature of fabric will be kept constant at the crystallization point. Once all the thermoregulatory constituents have crystallized, the fabric temperature will drop, and the thermoregulatory constituents will have no effect on the fabric's thermal performance.

Thus, the thermal performance of a thermoregulatory constituent is a function of phase change temperature, the amount of thermoregulatory constituent and the amount of energy it absorbs or releases during a phase change.

In accordance with one embodiment of this invention, there is provided a thermoregulatory acrylic formulation meant for manufacture of acrylic products comprising:
■ at least one non-water-soluble thermoregulatory constituent having a melting point lying in a predetermined range of temperature said constituent being in the range of about 0.01 to 7% of the mass of the formulation, " at least one water soluble nonionic surfactant having HLB value in the range of 9 to 40,said surfactant being in the range of 0.001 to 35 % of the mass of the formulation,
■ acrylic polymer in the range of about 1 to 15% of the mass of the formulation,
■ a solvent for polyacrylonitrile in the range of 20 to 60% of the mass of the formulation; and
■ water in the range of about 5 % to 60 % of the mass of the formulation.

In accordance with the invention, thermoregulatory constituent is typically at least one selected from a group consisting of nona-decane, eicosane, heptadecane, octadecane, decyl alcohol, lauryl alcohol and myristyl alcohol.

The thermoregulatory constituent impart thermoregulation property to the fibers and ultimately to the fabric or garments made from these fibers.

The non-ionic surfactant is selected such that the lipophilic portion of the non-ionic surfactant is compatible with the thermoregulatory constituent and the surfactant forms oil in water micro emulsion. Surfactants with HLB values within the range of 9 to 40 are used. Preferably, non-ionic surfactants with HLB values more than 13 are used.

In accordance with one preferred embodiment of the invention, the HLB value of the surfactant is 16 to 40. Still preferably, the HLB value of the surfactant is 17.5.

The alkali can be any suitable alkali. Preferably, sodium hydroxide is used in the formulation. The alkalinity of the formulation is in the range of about 5% to 6%, preferably 5.6%.

In accordance with one aspect of the invention, the thermoregulatory constituent, the solvent and the surfactant are processed to form micro-reservoirs which are embedded into the body of the formulation. The thermoregulatory acrylic contains uniformly dispersed micro-reservoirs throughout the body of the fibers. The micro-reservoirs are discrete, nano-sized structures without any definite geometrical shape.

Typically, the average mean size of the micro-reservoir is in the range of 5 nm to 2000 nm.

The invention also extends to a thermoregulatory acrylic fiber, yarn and fabric manufactured from a formulation in accordance with this invention.

In accordance with this invention there is also provided a process for preparation of a thermoregulatory acrylic formulation meant for manufacture of acrylic products comprising the following steps:
- selecting a non-water-soluble thermoregulatory constituent having a melting point lying in a predetermined range and heating said constituent upto 95°C to form a non-aqueous phase ;
- dissolving and stirring a surfactant, optionally with a co-surfactant, a solvent for acrylic polymer in water to obtain an aqueous phase;
- heating the aqueous phase;
- mixing the aqueous phase with the non-aqueous phase in liquid state to form an admixture, and homogenizing to obtain a micro-emulsion;
- mixing the micro-emulsion with an acrylic polymer solution in a solvent and water and further homogenizing and dispersing the micro-emulsion to obtain a preform mass wherein the thermoregulatory constituent is in the form of evenly dispersed micro-reservoirs.

Typically, the pH of the aqueous phase is in the range of 7 to 13.

Typically, the amount of non-aqueous phase in the micro-emulsion is in the range of 0.1 to 40% of the mass of the micro-emulsion.

Typically, the amount of surfactant in the micro-emulsion is in the range of 0.1 to 20% of the mass of the micro-emulsion.

Before arriving at the optimum concentration of the surfactant to be used, cloud point of the aqueous phase is determined. Furthermore, alkalinity of the aqueous phase is made to match with that of the viscous polymer dope thereby avoiding any drastic change in the alkalinity during the emulsification and homogenization step.

Typically, the melted non-aqueous phase containing thermoregulatory constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a microemulsion. The micro-emulsion may contain further additional thermoregulatory constituents, if desired.

It is important that the non-aqueous phase is maintained in liquid state throughout the mixing process. The aqueous phase therefore is typically heated upto a particular temperature to ensure that the temperature of the resulting emulsion is above the melting point of the thermoregulatory constituent. If this does not happen, the resulting emulsion will break down.

The active ingredients are released from the micro-reservoir into the acrylic matrix. The structure of micro-reservoir, acrylic and surrounding conditions determine the release rate of the thermoregulatory constituent. The molecules of the volatile thermoregulatory constituents migrate from micro-reservoirs to the surrounding primarily by diffusion. The thermoregulatory constituent is released from the matrix in a controlled release manner.

According to another embodiment of this invention, there is provided an antimicrobial acrylic formulation meant for manufacture of acrylic products comprising:
■ at least one non-aqueous solvent in the range of about 0.01 to 7% of the mass of the formulation,
■ at least one water insoluble antimicrobial constituent soluble said solvent, in the range of about 0.001 to 3.5% of the mass of the formulation ,
■ at least one water soluble nonionic surfactant having HLB value in the range of 9 to 40, in the range of 0.001 to 3% of the mass of the formulation,
■ a solvent for acrylic polymer in the range of 20 to 60% of the mass of the formulation, ■ acrylic polymer in the range of about 1 to 15% of the mass of the formulation, and
■ water in the range of about 5% to 60 % with respect to the mass of the formulation.

In accordance with the invention, anti-microbial constituent is typically at least one selected from a group consisting of 2-Methyl-4-isothiazolin-3-one, water, Phenoxyethanol Benzoic acid, 4-Hydroxy-methyl ester, Hydroxy-benzoic acid and propyl ester), o- (2-naphthyl) methyl (3-methylphenyl) thiocarbamate, 5-chloro-2-(2,4-dichlorophenoxy)phenol, 4,5-dichloro-n-octyl-4-isothiazoline-3-one[DCOIT] 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

The antimicrobial constituent impart antimicrobial property to the fibers and ultimately to the fabric or garments made from these fibers.

Preferably, paraffin wax either alone or in combination with stearyl alcohol is used as the non-aqueous solvent.

The non-ionic or anionic surfactant is selected such that the lipophilic portion of the non-ionic or anionic surfactant is compatible with the antimicrobial constituent and the surfactant forms oil in water microemulsion. Surfactants with HLB values within the range of 9 to 40 are used.

The alkali can be any suitable alkali for the acrylic process. Preferably, sodium hydroxide is used in the formulation. The alkalinity of the formulation is in the range of about 5% to 6%, preferably 5.6%.

In accordance with one aspect of the invention, the antimicrobial constituent, the solvent and the surfactant are processed to form micro-reservoirs which are embedded into the body of the formulation. The antimicrobial acrylic contains uniformly dispersed micro-reservoirs throughout the body of the fibers. The micro-reservoirs are discrete, nano-sized structures without any definite geometrical shape.

The invention also extends to an antimicrobial acrylic fiber, yarn and fabric manufactured from a formulation in accordance with this invention.

In accordance with this invention there is also provided a process for preparation of an antimicrobial acrylic formulation meant for manufacture of acrylic products comprising the following steps :
■ admixing a water-insoluble antimicrobial constituent with a non-aqueous solvent, to form a non-aqueous phase ;
■ heating the non-aqueous phase upto 95°C;
■ dissolving and stirring a surfactant, optionally with a co-surfactant, a solvent for acrylic polymer in water to obtain an aqueous phase;
■ heating the aqueous phase;
■ mixing the aqueous phase with the non-aqueous phase in liquid state to form an admixture, and homogenizing to obtain a micro-emulsion;
■ mixing the micro-emulsion with an acrylic polymer solution in a solvent and water and further homogenizing and dispersing the micro-emulsion to obtain a polymer dope wherein the antimicrobial constituent is embedded in evenly dispersed micro-reservoirs.

Typically, the proportion of antimicrobial constituent in the acrylic product is in the range of 0.01 to 5% with respect to the mass of the acrylic product. Before arriving at the optimum concentration of the surfactant to be used, cloud point of the aqueous phase is determined.

Typically, the melted non-aqueous phase containing antimicrobial constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a microemulsion. The micro-emulsion may contain further additional antimicrobial constituents, if desired.

The active ingredients are released from the micro-reservoir into the acrylic matrix. The structure of micro-reservoir, acrylic and surrounding conditions determine the release rate of the antimicrobial constituent. The molecules of the volatile antimicrobial constituents migrate from micro-reservoirs to the surrounding primarily by diffusion. The antimicrobial constituent is released from the matrix in a controlled release manner.

According to yet another embodiment of this invention, there is provided a perfumed acrylic formulation meant for manufacture of acrylic products comprising :
■ at least one non-aqueous solvent in the range of about 0.01 to 7% of the mass of the formulation,
■ at least one water insoluble perfume constituent soluble said solvent, in the range of about 0.001 to 3.5% of the mass of the formulation ,
■ at least one water soluble nonionic surfactant having HLB value in the range of 9 to 40, in the range of 0.001 to 3% of the mass of the formulation,
■ a solvent for polyacrylonitrile in the range of 20 to 60% of the mass of the formulation,
■ acrylic polymer in the range of about 1 to 15% of the mass of the formulation, and
■ water in the range of about 5% to 60 % with respect to the mass of the formulation.

In accordance with the invention, various perfume constituents from different sources are used. The typical perfume comprises a plurality of individual perfume active compounds, although it can consist essentially of a single perfume ingredient. It is well within the scope of the perfumer of ordinary skill in the art changing ingredients in the perfume component and/or modifying the relative levels of perfume ingredients.

In case of synthetic perfume constituents, a perfume constituent is a composition of one or more synthetic compounds. Various types of chemical compounds are commonly known for perfumery uses including: phenolic compounds; essential oils; aldehydes; ketones; polycyclic compounds; esters; and alcohols. Many perfume ingredients contain a combination of functional groups and can be categorized under two or more of the above classes. Various plant derived perfume constituents generally include variety of phyto-chemicals along with the principle active phyto-constituent.

From the standpoint of the perfumer, it is convenient to consider the perfume ingredients in terms of the type of aroma it imparts rather than the particular chemical class or classes it may fall within. The perfume components herein can be formulated to provide a variety of odor categories: a non-exclusive list includes woody, sweet, citrus, floral, fruity, animal, spice, green, musk, balsamic, chemical, and mint. A variety of exemplary perfume ingredients are described below for several of the commonly used odor categories, long with their representative (but not necessarily exclusive) chemical categories.

Woody perfume ingredients include cedarwood oil (essential oil), guaicwood oil (essential oil), gamma ionone (ketone), sandalwood oil (essential oil), and methyl cedrylone (ketone). Sweet perfume ingredients include coumarin (ketone), vanillin (4 hydroxy-θmethoxy benzaldehyde) (aldehyde), ethyl maltol (Alcohol), phenyl acetaldehyde (aldehyde), heliotropin (aldehyde), acetophenone (ketone), and dihydrocoumarin (ketone). Citrus perfume ingredients include orange oil (essential oil), lemon oil (essential oil), citral (aldehyde), beta methyl naphthyl ketone (ketone), terpinyl acetate (ester), nonyl aldehyde (aldehyde), terpineol (alcohol), and dihydromyrcenol (alcohol). Floral perfume ingredients include a variety of floral subcategories, such as rose, lavender, jasmin, and muguet. Rose perfume ingredients include geranyl acetate (ester), geraniol (alcohol), citronelyl acetate (ester), phenyl ethyl alcohol (alcohol), alpha damascone (ketone), beta damascone (ketone), geranium oil (essential oil), and natural rose oil (essential oil). Lavender perfume ingredients include dihydro terpinyl acetate (ester), ethyl hexyl ketone (ketone), lavandin (essential oil), lavender (essential oil), terra hydro linalool (alcohol), linalool (alcohol), and linalyl acetate (ester). Jasmin perfume ingredients include benzyl acetate (ester), butyl cinnamic aldehyde (aldehyde), methyl benzoate (ester), natural jasmin oil (essential oil), methyl dihydro jasmonate (ester). Muguet perfume ingredients include cycalmen aldehyde (aldehyde), benzyl salycilate (ester), hydroxycitronellol (alcohol), citronellyl oxyacetaldehyde (aldehyde), and hydroxy aldehyde (aldehyde). Fruity perfume ingredients include ethyl-2-methyl butyrate (ester), allyl cyclohexane propionate (ester), amyl acetate (ester), ethyl acetate (ester), gamma decalactone (ketone), octaiactone (ketone), undecalactone (aldehyde), ethyl aceto acetate (ester), benzaldehyde (aldehyde). Animal perfume ingredients include methyl phenyl acetate (ester), indol (2,3, benzpyrrole) (phenolic), creosol (phenolic), iso butyl quinolin (phenolic), and androstenol (phenolic). Spice perfume ingredients include anisic aldehyde (aldehyde), anise (essential oil), clove oil (essential oil), eugenol (phenolic), iso eugenol (phenolic), thymol (phenolic), anethol (phenolic), cinnamic alcohol (alcohol), and cinnamic aldehyde (aldehyde). Green perfume ingredients include beta gamma hexenol (alcohol), brom styrol (alcohol), dimethyl benzyl carbinol (alcohol), methyl heptine cart onate (ester), cis-3-hexenyl acetate (ester), and galbanum oil (essential oil). Musk perfume ingredients often also function as fixatives. Examples of musk include glaxolide (phenol), cyclopentadecanolide (phenol), musk ketone (ketone), ambrettolide (phenol), tonalid (phenol), and ethylene brassylate (ester). Balsamic perfume ingredients include fir balsam (essential oil, peru balsam (essential oil), and benzoin resinoid (essential oil). Mint perfume ingredients include laevo carvone (ketone), menthol (alcohol), methyl salicylate (ester), peppermint oil (essential oil), spearmint oil (essential oil), eucalyptus (essential oil), anisyl acetate (ester), methyl chavicol (alcohol). Nonionic Surfactant Chemical perfume ingredients include benzyl alcohol (alcohol), diproplene glycol (alcohol), ethanol (alcohol), and benzyl benzoate (ester), Andrane, Cedramber, Decyl methyl ether, Galaxolid, Grisalv, Indolarome-soli, Orange flower ether, Ozofleu, Phenafleu, Tobacaro, Paracresyl methyl Ether, Karana, Cyclogalbanat, Piconi, Iso-cyclemone, Iso E supe, Celestolide-soli, Fleuramon" ihydroisojasmon, Isojasmon, Tonali, Methyl Ionone , Dulcinyl-soli, Acetanisol, Vetikon, Undecylenic Aldehyd, lilia, Vanilli, Cinnamic Alcoho, Iso-Eugeno, Tetra-Hydro Geranio, Calone 10 % DE, Dihydro-isojasmon, Galaxolide, Karanal 10% DE, Yara Yara (Nerolin), Decyl methyl ether, Ethyl Methyl Phenyl Glycidate, Para-Cresyl Phenyl acetate, Undecalactone, Clonal IFF Preferred plant derived perfume compositions are provided herein below: Rose oil: beta-damascenone, beta-damascone. beta-ionone and rose oxide: Lavender oil: linalool and linalyl acetate: Orange oil: d-limonene: Jasmine oil: benzyl acetate, linalool, benzyl alcohol, indole, benzyl benzoate, cis-jasmone, geraniol and methyl anthranilate; Sandalwood oil: santalols, santene, nortricycloekasantalene and a- and ,β-santalenes, santenol and teresantalol; Cedarwood oil: p-methyl-8-3- tetrahydroacetophenone, p-methyl acetophenone, cis- and trans- atlantones, oc- and β-himalchenes, ar-dihydroturmerone and himachalol.

The perfume constituent impart peculiar pleasant aroma or fragrance to the fibers and ultimately to the fabric or garments made from these fibers.

In accordance with this invention, only non-aqueous solvent is used which is typically selected from a group of solvents consisting of Ci₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, diethyl phthalate and other alkyl phthalates, benzyl alcohol, C4 -C30 aliphatic alcohols ,C4 -C30 saturated hydrocarbons, C₄ -C₃₀ monounsaturated hydrocarbons, natural oils and mineral oil paraffins.

Preferably, paraffin wax either alone or in combination with stearyl alcohol is used as the non-aqueous solvent.

In accordance with this invention only water soluble non cationic surfactant/co-surfactant is used. Typically, the non-ionic surfactant is selected from a group consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol. Typically, the alkyl phenoxy ethoxylated non-ionic surfactant is at least one selected from a group consisting of Polyoxyethylene(8) isooctylphenyl ether, Nonylphenol polyethylene glycol ether, Polyoxyethylene(9) nonylphenyl ether, Polyoxyethylene(IO) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(IOO) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) ( nonylphenol 9.5-mole ethoxylate), Surfonic N-95(Poly (oxy-1, 2-ethanediyl), alpha- (nonyl phenyl)-omega-hydroxylglycol ether) ( nonylphenol 9.5-mole ethoxylate), Surfonic N-120(nonylphenol 12-mole ethoxylate), Surfonic N- 150 (nonylphenol 15-mole ethoxylate), Surfonic N-200 (nonylphenol 20-mole ethoxylate), Surfonic N-300( nonylphenol 30-mole ethoxylate), Surfonic N-400 nonylphenol 40-mole ethoxylate, Surfonic LF-7 (Alkyl polyoxyalkylene ether), Surfonic LF- 17 (ethoxylated and propoxylated linear primary 12-14 carbon number alcohol), Igepal CO-630 (nonylphenoxy poly(ethyleneoxy)ethanol,branched), Surfonic DNP-40 (dinonylphenol ethoxylate glycol ether).

The non-ionic surfactant is selected such that the lipophilic portion of the non-ionic surfactant is compatible with the perfume constituent and the surfactant forms oil in water micro-emulsion. Surfactants with HLB values within the range of 9 to 40 are used. Preferably, non-ionic surfactants with HLB values more than 13 are used.

In accordance with one preferred embodiment of the invention, the HLB value of the surfactant is between 16 and 40.

Typically, the alkali used in the formulation is sodium hydroxide. Typically, the alkalinity of the formulation is in the range of about 5% to 6% , preferably 5.6%. In accordance with one aspect of the invention, the perfume constituent, the solvent and the surfactant are processed to form micro-reservoirs which are embedded into the body of the formulation. The perfumed acrylic contains uniformly dispersed micro-reservoirs throughout the body of the fibers. The micro-reservoirs are discrete, nano-sized structures without any definite geometrical shape.

Typically, the average mean size of the micro-reservoir is in the range of 5 nm to 2000 nm.

The invention also extends to a perfume acrylic fiber, yarn and fabric manufactured from a formulation in accordance with this invention.

In accordance with this invention there is also provided a process for preparation of a perfume acrylic formulation meant for manufacture of acrylic products comprising the following steps:
- admixing a water-insoluble perfume constituent with a non-aqueous solvent, to form a nonaqueous phase;
- heating the non-aqueous phase to a temperature in the range of 25°C to 95°C;
- dissolving and stirring a surfactant, optionally with a co-surfactant, a solvent for acrylic polymer in water to obtain an aqueous phase;
- heating the aqueous phase;
- mixing the aqueous phase with the non-aqueous phase in liquid state to form an admixture, and homogenizing to obtain a micro-emulsion;
- mixing the micro-emulsion with an acrylic polymer solution in a solvent and water and further homogenizing and dispersing the micro-emulsion to obtain a polymer dope wherein the perfume constituent is embedded in evenly dispersed micro-reservoirs.

Typically, the pH of the aqueous phase is in the range of 7 to 13.

Typically, the amount of non-aqueous phase in the micro-emulsion is in the range of 0.1 to 40% of the mass of the micro-emulsion.

Typically, the amount of surfactant in the micro-emulsion is in the range of 0.1 to 20% of the mass of the micro-emulsion.

Typically, the proportion of perfume constituent in the acrylic product is in the range of 0.001 to 20% with respect to the mass of the acrylic product.

Before arriving at the optimum concentration of the surfactant to be used, cloud point of the aqueous phase is determined. Furthermore, alkalinity of the aqueous phase matches with that of the viscous polymer dope thereby avoiding any drastic change in the alkalinity during the emulsification and homogenization step.

Typically, the melted non-aqueous phase containing perfume constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a microemulsion. The micro-emulsion may contain further additional perfume constituents, if desired.

The active ingredients are released from the micro-reservoir into the acrylic matrix. The structure of micro-reservoir, acrylic and surrounding conditions determine the release rate of the perfume constituent. The molecules of the volatile perfume constituents migrate from micro-reservoirs to the surrounding primarily by diffusion. The perfume constituent is released from the matrix in a controlled release manner.

The preform mass obtained as above can be further spun into filaments, in a spin bath using conventional regeneration media. A typical conventional regeneration media comprises 100-140 gm/liter sulfuric acid, 100-370 gm/liter salt (sodium sulfate) and retardants (0-60 gm/liter) aluminum sulfate, zinc sulfate.

The filaments so obtained are stretched to straighten out the fibers which are further subjected to 18% sulfuric acid treatment at 95°C for 15 min, washing, desulphurization with 0.6 sodium hydroxide (gm/liter) at 80°C for 15 min, bleaching with sodium hypochloride (1.2 gm/liter) at 45°C for 15 min, followed by water washing at 30°C for 15 minutes, neutralization with acetic acid (1 gm/liter) at 45°C for 15 min and drying at 80 -120°C.

The acrylic fibers made as above can be further subjected to post treatment to make fabric which typically involves Converting to Yarn in blend or pure, Converting to Warp Beam, Sizing, Fabric Manufacturing, Desizing, Scouring, Bleaching, Dyeing, Finishing, and Garmenting.

Alternatively, the filaments so obtained are stretched to straighten out the fibers which are further blended using standard equipment. The blended fibers are laid in to a web followed by Consolidation of the web to obtain Non-woven Acrylic Fabric.

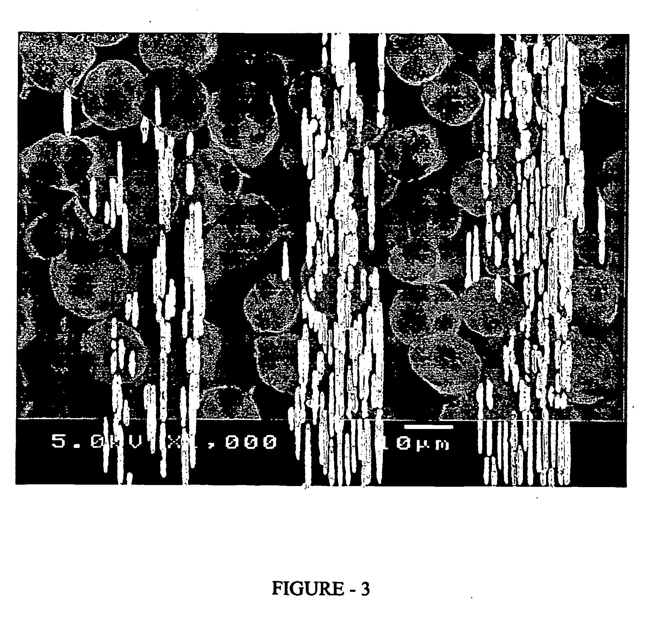

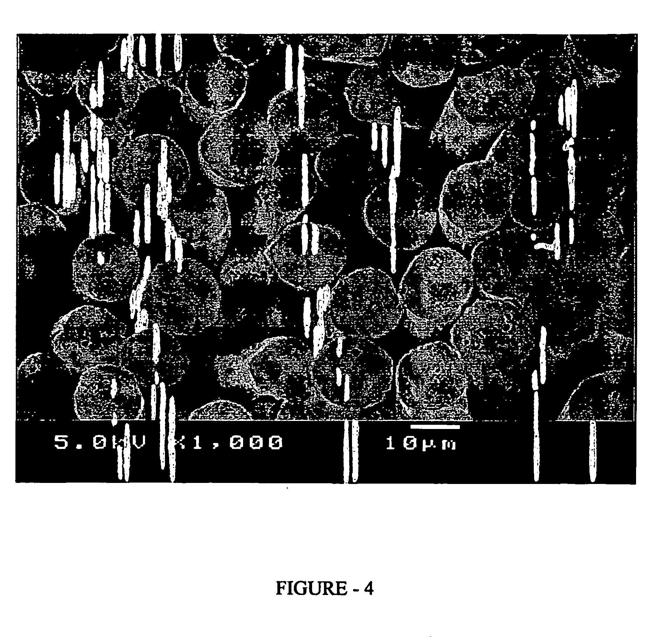

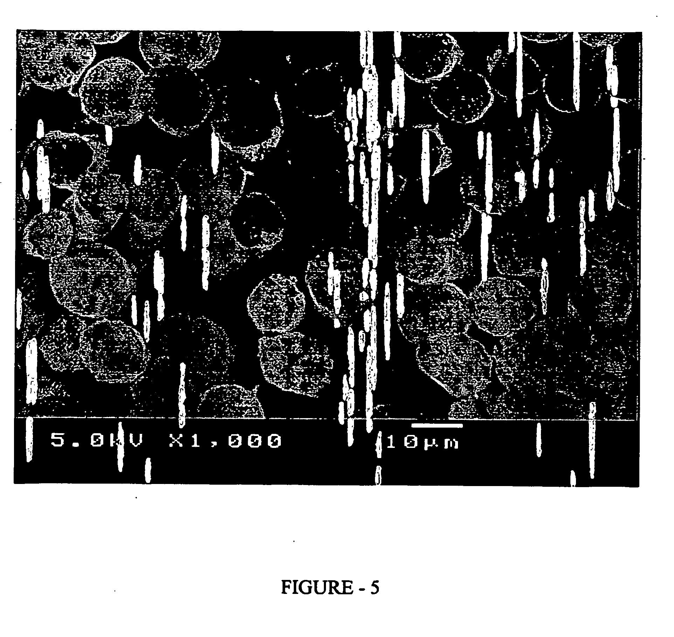

The acrylic product made from the formulation in accordance with this invention contains uniformly dispersed micro-reservoirs throughout the mass which is shown in Figures 3, 4, and 5.

The thermoregulatory acrylic fibers contain the entrapped thermoregulatory constituent in releasable form. Microscopic examination of the micro-reservoirs in the acrylic fibers is shown in Fig 3.

Thermoregulatory fabric improves the comfort of people irrespective of the fluctuations in the temperature of their surroundings on either side. Besides this, thermoregulatory fabric also improves the comfort of people as their body goes through a very active state (high metabolic production) to an inactive state on an intermittent basis in a cold environment. This feature is of particular relevance for outdoor sportsmen.

The resultant acrylic fabric containing property-modifying constituents such as thermoregulatory constituents, antimicrobial constituents, and perfumed constituents are tested. Linear Density (Denier) of the acrylic Fibers is determined by using standard ASTM Test Method (D 1577). The denier of the standard acrylic fiber (acrylic fiber without any property-modifying constituents) and the property- modified acrylic fiber remains the same. Thus addition of the constituents does not change the linear density of the acrylic fibers.

Typically, the solvent for polyacrylonitrile is at least one selected from a group consisting of sodium thiocyanate, dimethyl formamide, dimethyl acetamide, dimethyl sulfoxide, ethylene carbonate, aqueous zinc chloride and aqueous nitric acid. The polymer percentages in the acrylic dope will vary depending on the solvent. For dimethyl formamide, acrylic polymer concentration soluble in polymer dope is as high as 28-32%; for dimethyl acetamide, it is as high as 22-27%; for dimethyl sulfoxide, it is as high as 20-25%; for ethylene carbonate, it is as high as 15-18%, for aqueous nitric acid, it is as high as 8-12% and for zinc chloride, it is as high as 8-12%. For Sodium thiocyanate as a solvent, acrylic polymer concentration is as high as 10-15%.

Tensile strength and Young's modulus of acrylic fiber sample is tested on an Instron- tensile testing machine as per the ASTM Cl 557-03 procedure at ambient temperature.

Visual appearances of the property-modified fiber is evaluated by methods as prescribed in AATCC 124. As far as parameters like % Loss in Dry Tenacity and % loss in dry elongation are concerned, these remain the same in the property-modified acrylic fiber and the standard fiber. Incorporation of property-modifying constituent in accordance with this invention does not affect the visual appearance of the fiber.

Feel of the fiber: The property-modified acrylic fiber as prepared in accordance with this invention offers the same feel effect as is observed in case of standard acrylic fiber).

Another important concern in textile industry is dye-ability of the fabric, which is tested by comparing the dyeability of the property-modified fabric and the standard acrylic fabric. Dyeability of the property-modified acrylic fibers as prepared in accordance with this invention remains the same as that of the standard acrylic fiber.

The invention will now be described with the help of the following non-limiting examples.

### First Set of Examples for thermoregulatory fibers:

### Example 1

**Example 1A** - Preparation of micro emulsion Myristyl alcohol (200gm) and hexadecane (50 gm) were heated upto 50°C. Sulfonic N-400 nonylphenol 40-mole ethoxylate (surfactant) ( 28 gm ) was dissolved and stirred in water 525 ml and Sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 1 B- Preparation of fiber

(1053 gm) of micro-emulsion as prepared in Example IA was mixed at 50°C with acrylic Polymer Dope containing 5000gm of acrylic polymer and 16670 gm of sodium thiocyanate and 20000 ml of water were added to obtained preform mass.

Preform mass was spun in a bath containing 12.5% of Sodium thiocyanate solution. The temperature of the bath was maintained at -2.5°C. Thereafter, the fiber was cold stretched, gel treated at pH 2.8 at 45°C, then hot stretch at 90°C. The void in the fibers was removed by treating the fiber at 125°C. Fiber is then relaxed and annealed at 120°C and then taken up for post-treatments and was spun into fiber.

The acrylic fiber thus obtained contained micro-reservoirs having the entrapped releasable thermoregulatory constituents. Although the micro reservoirs did not have any specific shape or size, they were found to be uniformly distributed throughout the body of the fiber.

### Example 2

### Example 2A- Preparation of micro emulsion

Nonadecane (200gm) and hexadecane (50 gm) were heated upto 50°C. Surfonic N-400 nonylphenol 40-mole ethoxylate (surfactant) ( 28 gm ) was dissolved and stirred in water 525 ml and sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 2 B- Preparation of fiber

(1053 gm) of micro-emulsion as prepared in Example 2A was mixed at 50°C with acrylic Polymer Dope containing 5000gm of acrylic polymer and 16670 gm of sodium thiocyanate and 20000 ml of water were added to obtained preform mass and was spun into fiber as described in example 1.

### Example 3

### Example 3 A

Pentadecane (200gm) and Myristyl alcohol (50 gm) were heated upto 40°C. Surfonic N-400 nonylphenol 40-mole ethoxylate (surfactant) ( 28 gm ) was dissolved and stirred in water 525 ml and sodium thiocyanate (250 gm) to obtain (803 gm) of aqueous phase.

The aqueous phase (803 gm) was heated temperature of the molten non-aqueous phase (250 gm) and both the phases were homogenized in a high speed mixer (Ultraturrex) to obtain a micro-emulsion ( 1053 gm).

### Example 3 B- Preparation of fiber

(1053 gm) of micro-emulsion as prepared in Example 3 A was mixed at 50°C with acrylic Polymer Dope containing (5000gm) of acrylic polymer and (16670 gm) of sodium thiocyanate and 20000 ml of water were added to obtained preform mass and was spun into fiber as described in example 1.

### Example 4

### Example 4 A

### Preparation of thermoregulatory formulation

Nonadecane (200gm) and octadecane (50 gm) were heated upto 45°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 4 B

### Preparation of fiber

( 1053 gm) of micro-emulsion as prepared in Example 4A was mixed at 50°C with acrylic Polymer Dope containing (5000gm) of acrylic polymer and (16670 gm) of sodium thiocyanate and 20000 ml of water were added to obtained preform mass and was spun into fiber as described in example 1.

### Example 5

### Example 5A

Preparation of thermoregulatory formulation Icosane (110 gm) and hexadecane (140 gm) were heated upto 45°C: Surfonic N-400 nonylphenol 40-mole ethoxylate (surfactant) ( 28 gm) was dissolved and stirred in water 525 ml and sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 5 B- Preparation of fiber

(1053 gm) of micro-emulsion as prepared in Example 5 A was mixed at 50°C with acrylic Polymer Dope containing 1086 gm of acrylic polymer and 3620 gm of sodium thiocyanate and 4340 ml of water were added to obtained preform mass and was spun into fiber as described in example 1.

### Example 6

### Example 6 A

### Preparation of thermoregulatory formulation

Nonadecane (110gm) and hexadecane (140 gm) were heated upto 45°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase.

The aqueous phase (803 gm) was heated temperature of the molten non-aqueous phase (250 gm) and both the phases were homogenized in a high speed mixer (Ultraturrex) to obtain a micro-emulsion (1053 gm).

### Example 6 B- Preparation of fiber

(1053 gm) of micro-emulsion as prepared in Example 6A was mixed at 50°C with acrylic Polymer Dope containing (5000gm) of acrylic polymer and (16670 gm) of sodium thiocyanate and 20000 ml of water were added to obtained preform mass and was spun into fiber as described in example 1.

### Example 7

### Example 7 A

### Preparation of thermoregulatory formulation

Eicosane (100 gm) and hexadecane (150 gm) were heated upto 45°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase.

The aqueous phase (803 gm) was heated temperature of the molten non-aqueous phase (250 gm) and both the phases were homogenized in a high speed mixer (Ultraturrex) to obtain a micro-emulsion (1053 gm).

### Example 7 B- Preparation of fiber

(1053 gm) of micro-emulsion as prepared in Example 7A was mixed at 50°C with acrylic Polymer Dope containing (5000gm) of acrylic polymer and (16670 gm) of sodium thiocyanate and 20000 ml of water were added to obtained preform mass and was spur, into fiber as described in example 1.

### Example 8

### Example 8 A

### Preparation of thermoregulatory formulation

Heptadecane (100 gm) and hexadecane (150 gm) were heated upto 45°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase.

The aqueous phase (803 gm) was heated temperature of the molten non-aqueous phase (250 gm) and both the phases were homogenized in a high speed mixer (Ultraturrex) to obtain a micro-emulsion (1053 gm).

### Example 8 B- Preparation of fiber

(1053 gm) of micro-emulsion as prepared in Example 8A was mixed at 50°C with acrylic Polymer Dope containing (5000gm) of acrylic polymer and (16670 gm) of sodium thiocyanate and 20000 ml of water were added to obtained preform mass and was spun into fiber as described in example 1.

### Example 9

### Example 9A- Preparation of micro emulsion

### Preparation of thermoregulatory formulation

Nonadecane (250 gm) was heated upto 40°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 9 B- Preparation of fiber

(1053 gm) of micro-emulsion as prepared in Example 9A was mixed at 50°C with acrylic Polymer Dope containing 5000 gm of acrylic polymer and 16670 gm of sodium thiocyanate and 20000 ml of water were added to obtained preform mass and was spun into fiber as described in example 1.

### Example 10

### Example 10 A- Preparation of micro emulsion

Myristyl alcohol (150gm) pentadecane (100 gm) were heated upto 40°C. Surfonic N-400 nonylphenol 40-mole ethoxylate (surfactant) ( 28 gm) was dissolved and stirred in water 525 ml and sodium thiocyanate (250 gm) to obtain (803 gm) of aqueous phase. The aqueous phase (803 gm) was heated temperature of the molten non-aqueous phase (250 gm) and both the phases were homogenized in a high speed mixer (Ultraturrex) to obtain a micro-emulsion (1053 gm).

### Example 10 B- Preparation of fiber

(1053 gm) of micro-emulsion as prepared in Example 1OA was mixed at 50°C with acrylic Polymer Dope containing 5000 gm of acrylic polymer and 16670 gm of sodium thiocyanate and 20000 ml of water were added to obtained 5000 gm preform mass and was spun into fiber as described in example 1.

**Second Set of Examples for antimicrobial fibers:**

### Example 1

### Example 1A- Preparation of micro emulsion

Myristyl alcohol (200gm) and cetyl alcohol (50 gm) were heated upto 50°C to obtain a molten mixture.

To this 25 gm of 2-Methyl-4-isothiazolin-3-one, water, phenoxyethanol Benzoic acid, 4-Hydroxy-methyl ester, Hydroxy-benzoic acid and propyl ester were added to form a non-aqueous phase. (275gm) Surfonic N-400 nonylphenol 40-mole ethoxylate (surfactant) ( 28 gm) was dissolved and stirred in water 525 ml and Sodium thiocyanate (250 gm) to obtain (803 gm) of aqueous phase. The aqueous phase (803 gm) was heated to the temperature of the molten non-aqueous phase (275 gm) and both the phases were homogenized in a high speed mixer (Ultraturrex) to obtain a micro-emulsion (1078 gm).

### Example 1 B- Preparation of fiber

(1078 gm) of micro-emulsion as prepared in Example IA was mixed at 50°C with acrylic Polymer Dope containing 5000gm of acrylic polymer and 16670 gm of sodium thiocyanate and 20000 ml of water were added to obtained preform mass. Preform mass was spun in a bath containing 12.5% of Sodium thiocyanate solution. The temperature of the bath was maintained at -2.5°C. Thereafter, the fiber was cold stretched, gel treated at pH 2.8 at 45°C, then hot stretched at 90°C. The void in the fibers was removed by treating the fiber at 125°C. Fiber is then relaxed and annealed at 120°C and then taken up for post-treatments and was spun into fiber.

The acrylic fiber thus obtained contained micro-reservoirs having the entrapped releasable thermoregulatory constituents. Although the micro reservoirs did not have any specific shape or size, they were found to be uniformly distributed throughout the body of the fiber.

### Example 2

### Example 2A- Preparation of micro emulsion

Stearyl (200gm) and cetyl alcohol (50 gm) were heated upto 50°C to obtain a molten mixture. To this 25 gm of 4,5-dichloro-n-octyl-4-isothiazoline-3-one[DCOIT]was added to form a non-aqueous phase. (275gm) Surfonic N-400 nonylphenol 40-mole ethoxylate (surfactant) ( 28 gm) was dissolved and stirred in water 550 ml and Sodium thiocyanate (250 gm) to obtain (838 gm) of aqueous phase.

The aqueous phase (838 gm) was heated to the temperature of the molten non-aqueous phase (275 gm) and both the phases were homogenized in a high speed mixer (Ultraturrex) to obtain a micro-emulsion (1103 gm).

### Example 2 B- Preparation of fiber

(1103 gm) of micro-emulsion as prepared in Example 2A was mixed at 50°C with acrylic Polymer Dope containing 5000 gm of acrylic polymer and 16670gm of sodium thiocyanate and 20000 ml of water were added to obtained preform mass and the fiber was obtained by the process as described in example 1.

### Example 3

### Example 3A- Preparation of micro emulsion

Stearyl alcohol (200gm) and Polyvinyl laurate (50 gm) were heated upto 50°C to obtain a molten mixture. To this 100 gm of chloroquinaldol was added to form a non-aqueous phase (350gm) Surfonic N-400 nonylphenol 40-mole ethoxylate (surfactant) ( 30 gm) was dissolved and stirred in water 525 ml and Sodium thiocyanate (250 gm) to obtain (805 gm) of aqueous phase. The aqueous phase (805 gm) was heated to the temperature of the molten non-aqueous phase (350 gm) and both the phases were homogenized in a high speed mixer (Ultraturrex) to obtain a micro-emulsion (1155 gm).

### Example 3B- Preparation of fiber

(1155 gm) of micro-emulsion as prepared in Example 3A was mixed at 50°C with acrylic Polymer Dope containing 5000 gm of acrylic polymer and 16670gm of sodium thiocyanate and 20000 ml of water were added to obtained preform mass and the fiber was prepared by the process as described in example 1.

### Example 4

### Example 4A- Preparation of micro emulsion

Stearyl (200gm) and paraffin wax (50 gm) were heated upto 50°C to obtain a molten mixture. To this 75 gm of 2-Methyl-4-isothiazolin-3-one, water, Phenoxyethanol Benzoic acid, 4-Hydroxy-methyl ester, Hydroxy-benzoic acid and propyl ester were added to form a non-aqueous phase (325gm) Surfonic N- 400 nonylphenol 40-mole ethoxylate (surfactant) (40gm) was dissolved and stirred in water 550 ml and Sodium thiocyanate (250 gm) to obtain (840 gm) of aqueous phase.

The aqueous phase (840 gm) was heated to the temperature of the molten non-aqueous phase (325 gm) and both the phases were homogenized in a high speed mixer (Ultraturrex) to obtain a micro-emulsion (1165 gm).

### Example 4B- Preparation of fiber

(1165 gm) of micro-emulsion as prepared in Example 4A was mixed at 50°C with acrylic Polymer Dope containing 5000 gm of acrylic polymer and 16670gm of sodium thiocyanate and 20000 ml of water were added to obtained preform mass.

### Example 5

### Example 5A- Preparation of micro emulsion

Stearyl alcohol (300 gm) and Myristyl alcohol (50 gm) were heated upto 50°C to obtain a molten mixture. To this 100 gm of 5-chloro-2-(2,4-dichlorophenoxy)phenol (triclosan) was added to form a non-aqueous phase (450gm) Surfonic N-400 nonylphenol 40-mole ethoxylate (surfactant) ( 60 gm) was dissolved and stirred in water 640ml and Sodium thiocyanate (250 gm) to obtain (950 gm) of aqueous phase.

The aqueous phase (950 gm) was heated to the temperature of the molten non-aqueous phase (450 gm) and both the phases were homogenized in a high speed mixer (Ultraturrex) to obtain a micro-emulsion (1400gm).

### Example 5 B- Preparation of fiber

(1400gm) of micro-emulsion as prepared in Example 5A was mixed at 50°C with acrylic Polymer Dope containing 5000 gm of acrylic polymer and 16670gm of sodium thiocyanate and 20000 ml of water were added to obtained preform mass.

### Example 6

### Example 6A- Preparation of micro emulsion

Stearyl alcohol (200gm) and Myristyl alcohol (50 gm) were heated upto 50°C to obtain a molten mixture. To this 80 gm of clotrimazole was added to form a non-aqueous phase (330gm) Surfonic N- 400 nonylphenol 40-mo Ie ethoxylate (surfactant) ( 35 gm) was dissolved and stirred in water 540 ml and Sodium thiocyanate (250 gm) to obtain (825 gm) of aqueous phase. The aqueous phase (825 gm) was heated to the temperature of the molten non-aqueous phase (330 gm) and both the phases were homogenized in a high speed mixer (Ultraturrex) to obtain a micro-emulsion (1155gm).

### Example 6 B- Preparation of fiber

(1155 gm) of micro-emulsion as prepared in Example 6A was mixed at 50°C with acrylic Polymer Dope containing 5000 gm of acrylic polymer and 16670gm of sodium thiocyanate and 20000 ml of water were added to obtained preform mass.

### Example 7

### Example 7A- Preparation of micro emulsion

Myristyl alcohol (250gm) was heated upto 50°C to obtain a molten mixture. To this 40 gm of chloroquinaldol was added to form a non-aqueous phase (290gm) Surfonic N-400 nonylphenol 40-mole ethoxylate (surfactant) ( 35 gm) was dissolved and stirred in water 540 ml and Sodium thiocyanate (250 gm) to obtain (825 gm) of aqueous phase.

The aqueous phase (825 gm) was heated to the temperature of the molten non-aqueous phase (290 gm) and both the phases were homogenized in a high speed mixer (Ultraturrex) to obtain a micro-emulsion (1115 gm).

### Example 7 B- Preparation of fiber

(1115 gm) of micro-emulsion as prepared in Example 7A was mixed at 50°C with acrylic Polymer Dope containing 5000 gm of acrylic polymer and 16670gm of sodium thiocyanate and 20000 ml of water were added to obtained preform mass.

### Example 8

### Example 8A- Preparation of micro emulsion

Cetyl alcohol (250 gm) was heated upto 50°C to obtain a molten mixture. To this 25 gm of p-chloro-m-xylenol was added to form a non-aqueous phase (275gm) Surfonic N-400 nonylphenol 40-mole ethoxylate (surfactant) ( 28 gm) was dissolved and stirred in water 550 ml and Sodium thiocyanate (250 gm) to obtain (828 gm) of aqueous phase.

The aqueous phase (828 gm) was heated to the temperature of the molten non-aqueous phase (275 gm) and both the phases were homogenized in a high speed mixer (Ultraturrex) to obtain a micro-emulsion (1103 gm).

### Example 8B- Preparation of fiber

(1103 gm) of micro-emulsion as prepared in Example 8A was mixed at 50°C with acrylic Polymer Dope containing 5000 gm of acrylic polymer and 16670gm of sodium thiocyanate and 20000ml of water were added to obtained preform mass and fiber was obtained by the process as described in example 1.

### Example 9

### Example 9A- Preparation of micro emulsion

Stearyl alcohol (200gm) and cetyl alcohol (50 gm) were heated upto 50°C to obtain a molten mixture. To this 25 gm of 4,5-dichloro-n-octyl-4-isothiazoline-3-one[DCOIT]was added to form a non-aqueous phase (275gm) Surfonic N-400 nonylphenol 40-mole ethoxylate (surfactant) ( 28 gm) was dissolved and stirred in water 550 ml and Sodium thiocyanate (250 gm) to obtain (828 gm) of aqueous phase. The aqueous phase (828 gm) was heated to the temperature of the molten non-aqueous phase (275 gm) and both the phases were homogenized in a high speed mixer (Ultraturrex) to obtain a micro-emulsion (1 103 gm).

### Example 9 B- Preparation of fiber

(1103 gm) of micro-emulsion as prepared in Example 9A was mixed at 50°C with acrylic Polymer Dope containing 5000 gm of acrylic polymer and 16670gm of sodium thiocyanate and 20000 ml of water were added to obtained preform mass and fiber was obtained by the process as described in example 1.

### Example 10

### Example 10A- Preparation of micro emulsion

Stearyl alcohol (200gm) and cetyl alcohol (50 gm) were heated upto 50°C to obtain a molten mixture. To this 25 gm of p-chloro-m-xylenol was added to form a non-aqueous phase (275gm). Surfonic N-400 nonylphenol 40-mole ethoxylate (surfactant) ( 28 gm ) was dissolved and stirred in water 550 ml and Sodium thiocyanate (250 gm) to obtain (828 gm) of aqueous phase. The aqueous phase (828 gm) was heated to the temperature of the molten non-aqueous phase (275 gm) and both the phases were homogenized in a high speed mixer (Ultraturrex) to obtain a micro-emulsion (1103 gm).

### Example 10 B- Preparation of fiber

(1103 gm) of micro-emulsion as prepared in Example 1OA was mixed at 50°C with acrylic Polymer Dope containing 5000 gm of acrylic polymer and 16670gm of sodium thiocyanate and 20000 ml of water were added to obtained preform mass and fiber was obtained by the process as described in example 1.

### Third Set of Examples for perfumed fibers:

### Example 1

### Example 1 A- Preparation of micro emulsion

Myristyl alcohol (200gm) and cetyl alcohol (50 gm) were heated upto 50°C to obtain a molten mixture.

To this 25 gm of citrus musk was added to form a non-aqueous phase (275gm) Surfonic N-400 nonylphenol 40-mole ethoxylate (surfactant) ( 30 gm ) was dissolved and stirred in water 550 ml and Sodium thiocyanate (250 gm) to obtain (830 gm) of aqueous phase.

The aqueous phase (830 gm) was heated to the temperature of the molten non-aqueous phase (275 gm) and both the phases were homogenized in a high speed mixer (Ultraturrex) to obtain a micro-emulsion (1105 gm).

### Example 1 B- Preparation of fiber

(1105 gm) of micro-emulsion as prepared in Example IA was mixed at 50°C with acrylic Polymer Dope containing 5000gm of acrylic polymer and 16670gm of sodium thiocyanate and 20000 ml of water were added to obtained preform mass. Preform mass was spun in a bath containing 12.5% of Sodium thiocyanate solution. The temperature of the bath was maintained at -2.5°C. Thereafter, the fiber was cold stretched, gel treated at pH 2.8 at 45°C, then hot stretched at 90°C. The voids in the fibers were removed by treating the fiber at 125°C. Fiber is then relaxed and annealed at 120°C and then taken up for post-treatments and was spun into fiber.

The acrylic fiber thus obtained contained micro-reservoirs having the entrapped releasable perfume constituents. Although the micro reservoirs did not have any specific shape or size, they were found to be uniformly distributed throughout the body of the fiber.

### Example 2

### Example 2A- Preparation of micro emulsion

Stearyl (200gm) and cetyl alcohol (50 gm) were heated upto 50°C to obtain a molten mixture. To this 25 gm of floral woody was added to form a non-aqueous phase (275gm) Surfonic N-400 nonylphenol 40-mole ethoxylate (surfactant) ( 38 gm ) was dissolved and stirred in water 550 ml and Sodium thiocyanate (250 gm) to obtain (838 gm) of aqueous phase.

The aqueous phase (838 gm) was heated to the temperature of the molten non-aqueous phase (275 gm) and both the phases were homogenized in a high speed mixer (Ultraturrex) to obtain a micro-emulsion(1113 gm).

### Example 2 B- Preparation of fiber

(1113 gm) of micro-emulsion as prepared in Example 2A was mixed at50°C with acrylic Polymer Dope containing 5000 gm of acrylic polymer and 16670gm of sodium thiocyanate and 20000 ml of water were added to obtained preform mass and the fiber was obtained by the process as described in example 1.

### Example 3

### Example 3A- Preparation of micro emulsion

Stearyl alcohol (200gm) and Polyvinyl laurate (50 gm) were heated upto 50°C to obtain a molten mixture. To this 100 gm of woody musk was added to form a non-aqueous phase (350gm) Surfonic N- 400 nonylphenol 40-mole ethoxylate (surfactant) ( 30 gm ) was dissolved and stirred in water 525 ml and Sodium thiocyanate (250 gm) to obtain (805 gm) of aqueous phase. The aqueous phase (805 gm) was heated to the temperature of the molten non-aqueous phase (350 gm) and both the phases were homogenized in a high speed mixer (Ultraturrex) to obtain a micro-emulsion (1155 gm).

### Example 3B- Preparation of fiber

(1155 gm) of micro-emulsion as prepared in Example 3 A was mixed at 50°C with acrylic Polymer Dope containing 5000 gm of acrylic polymer and 16670gm of sodium thiocyanate and 20000 ml of water were added to obtained preform mass and the fiber was prepared by the process as described in example 1.

### Example 4

### Example 4A- Preparation of micro emulsion

Stearyl (200gm) and paraffin wax (50 gm) were heated upto 50°C to obtain a molten mixture. To this 75 gm of fresh bouquet was added to form a non-aqueous phase (325gm). Surfonic N-400 nonylphenol40-mole ethoxylate (surfactant) (40gm) was dissolved and stirred in water 550 ml and Sodium thiocyanate (250 gm) to obtain (840 gm) of aqueous phase.

The aqueous phase (840 gm) was heated to the temperature of the molten non-aqueous phase (325 gm) and both the phases were homogenized in a high speed mixer (Ultraturrex) to obtain a micro-emulsion (1165 gm).

### Example 4B- Preparation of fiber

(1165 gm) of micro-emulsion as prepared in Example 4A was mixed at 50°C with acrylic Polymer Dope containing 5000 gm of acrylic polymer and 16670gm of sodium thiocyanate and 20000 ml of water were added to obtained preform mass.

### Example 5

### Example 5A- Preparation of micro emulsion

Stearyl alcohol (300 gm) and Myristyl alcohol (50 gm) were heated upto 50°C to obtain a molten mixture. To this 100 gm of floral musk was added to form a non-aqueous phase (450gm) Surfonic N- 400 nonylphenol 40-mole ethoxylate (surfactant) ( 60 gm ) was dissolved and stirred in water 640ml and Sodium thiocyanate (250 gm) to obtain (950 gm) of aqueous phase.

The aqueous phase (950 gm) was heated to the temperature of the molten non-aqueous phase (450 gm) and both the phases were homogenized in a high speed mixer (Ultraturrex) to obtain a micro-emulsion (1400gm).

### Example 5 B- Preparation of fiber

(1400gm) of micro-emulsion as prepared in Example 5A was mixed at50°C with acrylic Polymer Dope containing 5000 gm of acrylic polymer and 16670gm of sodium thiocyanate and 20000 ml of water were added to obtained preform mass.

### Example 6

### Example 6A- Preparation of micro emulsion

Stearyl alcohol (200gm) and Myristyl alcohol (50 gm) were heated upto 50°C to obtain a molten mixture. To this 80 gm of citrus musk was added to form a non-aqueous phase (330gm). Surfonic N-400 nonylphenol 40-mole ethoxylate (surfactant) ( 35 gm ) was dissolved and stirred in water 540 ml and Sodium thiocyanate (250 gm) to obtain (825 gm) of aqueous phase.

The aqueous phase (825 gm) was heated to the temperature of the molten non-aqueous phase (330 gm) and both the phases were homogenized in a high speed mixer (Ultraturrex) to obtain a micro-emulsion (1155gm).

### Example 6 B- Preparation of fiber

(1155 gm) of micro-emulsion as prepared in Example 6A was mixed at 50°C with acrylic Polymer Dope containing 5000 gm of acrylic polymer and 16670gm of sodium thiocyanate and 20000 ml of water were added to obtained preform mass.

### Example 7

### Example 7A- Preparation of micro emulsion

Myristyl alcohol (250gm) was heated upto 50°C to obtain a molten mixture. To this 40 gm of citrus musk woody was added to form a non-aqueous phase (290gm) Surfonic N-400 nonylphenol 40-mole ethoxylate (surfactant) ( 35 gm ) was dissolved and stirred in water 540 ml and Sodium thiocyanate (250 gm) to obtain (825 gm) of aqueous phase.

The aqueous phase (825 gm) was heated to the temperature of the molten non-aqueous phase (290 gm) and both the phases were homogenized in a high speed mixer (Ultraturrex) to obtain a micro-emulsion (1115 gm).

### Example 7 B- Preparation of fiber

(1115 gm) of micro-emulsion as prepared in Example 7A was mixed at 50°C with acrylic Polymer Dope containing 5000 gm of acrylic polymer and 16670gm of sodium thiocyanate and 20000 ml of water were added to obtained preform mass.

### Example 8

### Example 8A- Preparation of micro emulsion

Cetyl alcohol (250 gm) were heated upto 50°C to obtain a molten mixture. To this 25 gm of floral woody was added to form a non-aqueous phase (275gm) Surfonic N-400 nonylphenol 40-mole ethoxylate (surfactant) ( 28 gm ) was dissolved and stirred in water 550 ml and Sodium thiocyanate (250 gm) to obtain (828 gm) of aqueous phase.

The aqueous phase (828 gm) was heated to the temperature of the molten non-aqueous phase (275 gm) and both the phases were homogenized in a high speed mixer (Ultraturrex) to obtain a micro-emulsion (1103 gm).

### Example 8B- Preparation of fiber

( 1103 gm) of micro-emulsion as prepared in Example 8A was mixed at 50°C with acrylic Polymer Dope containing 5000 gm of acrylic polymer and 16670gm of sodium thiocyanate and 20000 ml of water were added to obtained preform mass and fiber was obtained by the process as described in example 1.

### Example 9

### Example 9A- Preparation of micro emulsion

Stearyl alcohol (200gm) and cetyl alcohol (50 gm) were heated upto 50°C to obtain a molten mixture.

To this 25 gm of fresh bouquet was added to form a non-aqueous phase (275gm) Surfonic N-400 nonylphenol 40-mole ethoxylate (surfactant) ( 35 gm ) was dissolved and stirred in water 553 ml and Sodium thiocyanate (250 gm) to obtain (838 gm) of aqueous phase. The aqueous phase (828 gm) was heated to the temperature of the molten non-aqueous phase (275 gm) and both the phases were homogenized in a high speed mixer (Ultraturrex) to obtain a micro-emulsion (1113 gm).

### Example 9 B- Preparation of fiber

(1113 gm) of micro-emulsion as prepared in Example 9A was mixed at 50°C with acrylic Polymer Dope containing 5000 gm of acrylic polymer and 16670gm of sodium thiocyanate and 3110ml of water were added to obtained preform mass and fiber was obtained by the process as described in example 1.

### Example 10

### Example 10 A- Preparation of micro emulsion

Stearyl alcohol (200gm) and cetyl alcohol (50 gm) were heated upto 50°C to obtain a molten mixture. To this (25 gm) of lavender oil was added to form a non-aqueous phase (275gm). Surfonic N-400 nonylphenol 40-mole ethoxylate (surfactant) ( 40 gm ) was dissolved and stirred in water 548 ml and Sodium thiocyanate (250 gm) to obtain (838 gm) of aqueous phase. The aqueous phase (838 gm) was heated to the temperature of the molten non-aqueous phase (275 gm) and both the phases were homogenized in a high speed mixer (Ultraturrex) to obtain a micro-emulsion (1113 gm).

### Example 10 B- Preparation of fiber

(1113 gm) of micro-emulsion as prepared in Example 1OA was mixed at50°C with acrylic Polymer Dope containing 600 gm of acrylic polymer and 16670gm of sodium thiocyanate and 20000 ml of water were added to obtained preform mass and fiber was obtained by the process as described in example 1.

### Testing procedures:

The acrylic products as prepared in the above examples (1 to 10 of each set) were tested by using following test procedures:
1) Linear Density (Denier) of the acrylic Fibers was determined by using standard ASTM Test Method (D 1577).
   The denier of the standard acrylic fiber and the property-modified acrylic fibers as prepared in accordance with examples IB of each set was found to be uniform (1.5 denier) irrespective of the type and quantity of the property-modifying constituents.
2) Tensile strength and Young's modulus of acrylic fiber samples were tested on an Instron tensile testing machine as per the ASTM C1557-03 procedure at ambient temperature.
3) Emulsion stability: The stability of micro-emulsions as prepared in the above examples, was evaluated by keeping the same under observation in measuring cylinders for 3 days. During this period no phase separation was observed.
4) Feel of the fabric: The acrylic fabrics as prepared in the above examples and standard fabric were randomly given to twenty subjects and they were asked to evaluate the texture and feel of the fiber. The test fiber material was interchanged several times amongst the human subjects. Collective results as submitted by the human subjects confirmed that nobody could distinguish between the property-modified acrylic fabrics prepared in accordance with the Examples provided above and the standard fabric.
5) Dyeability: The property-modified acrylic fabrics as prepared in the above examples and the standard fabric as described above were dyed uniformly with reactive dyes. No noticeable difference as to the Dyeability of the two respective acrylic fabrics, with and without property- modified constituent was reported.
6) Visual appearance of the property-modified acrylic fiber was evaluated by methods as prescribed in AATCC 124. As far as parameters like % Loss in Dry Tenacity and % loss in dry. elongation are concerned, these remained the same(< 10% and < 15% respectively) in the property-modified acrylic fiber and the standard fiber.
7) Determination of enthalpy of the fabric specimen: the thermoregulatory properties of the specimen fabrics/fibers as prepared in examples 1 to 10 of the first set were evaluated by measuring respective enthalpies of the specimen. The enthalpies were measured using DSC (Differential scanning calorimetry) technique. The recorded enthalpies of the fiber and fabric obtained in examples 1 to 10 are provided in the Table 1.

**Table 1**

| **Specimen No.** | **Enthalpy J/g Fiber** | **Enthalpy J/g Fabric** |
|---|---|---|
| 1 | 5.5 | 45.4 |
| 2 | 6.4 | 6.38 |
| 3 | 5.6 | 5.63 |
| 4 | 6.02 | 5.98 |
| 5 | 37 | 36.3 |
| 6 | 7.6 | 7.58 |
| 7 | 8.4 | 8.41 |
| 8 | 7.2 | 7.19 |
| 9 | 7.6 | 7.6 |
| 10 | 5.2 | 5.24 |

### 8. Testing of thermoregulatory Activity:

Free flowing robes made to fit the physique of twenty human volunteers, selected at random between ages 16 to 56, were made from undyed thermoregulatory acrylic fabric prepared in accordance with this invention. Simultaneously, identical robes with same design were also made from undyed standard fabric (Acrylic fabric without any thermo regulatory constituents).

A temperature monitored room was selected where the temperature could be precisely controlled. The temperature in the room was set at 21°C. The twenty human volunteers were requested to wear the robes and assemble in the room and be there in the room for a period of 30 min. They were made to randomly wear either a standard robe (robe made from standard fabric) or a robe made from the fabric of this invention. But they were not informed about the type of the robe that was being worn. After 30 minutes, all the volunteers were asked to step out into the outside non-air-conditioned environment, where the temperature was 28°C and they were asked to observe and note the time when they felt warm in the area covered by the robe.

Thereafter, all the volunteers switched their robes, ie: The volunteer given a robe of standard fabric, was allotted a robe made from the fabric of this invention and vise-a-versa. They were again asked to go back into the room and remain there for 30 min. and again step out into the external environment and again observe and note the time when they started feeling warm. The volunteers were then asked to give an evaluation of the time required to feel the warmth in both the instances. The results of the experiments were as follows. Sixteen volunteers opined that they felt warm in the standard fabric, at least on an average of 90 sec. quicker than the fabric of this invention.

Three volunteers could not sense significant difference in time and one volunteer recorded an earlier feeling of warmth in case of the fabric of this invention.

In case of direct comparison between the robes, 18 volunteers opined that they felt cooler and more comfortable wearing a ward-robe made from the fabric of this invention.

Two volunteers expressed no significant difference between the two. There was no volunteer who provided any reverse finding. Similar test was conducted in which the volunteers were made to go from a hotter external environment at 30°C to an air-conditioned environment maintained at 21°C. 18 of the volunteers expressed that they felt warmer and more comfortable in the robe made from the fabric of this invention and the reported response time for feeling cold was on an average 3 min. longer. Two of the volunteers could not discern any significant difference between the two robes.

It is thus concluded that the fabric made in accordance with this invention exhibits thermoregulatory effect in either situation, i.e. when there is a rise in temperature and when there is a fall in the temperature.

### 9. Testing of antimicrobial constituent enriched fiber /fabrics

The antimicrobial constituent enriched acrylic fabrics as prepared in the above examples were tested for antimicrobial activity by various test procedures which included antimicrobial assays used to determine or confirm the effectiveness of treatments applied to medical devices, medical and commercial textiles, and other products.

Minimum sample requirements 9 square inches or 6 inches long, per test AATCC 100 (Part I) is a qualitative test for antibacterial activity. Test acrylic fiber/fabric specimens were placed into contact with a nutrient agar which had been streaked with either Staphylococcus aureus or Escherichia coli bacterial culture. Samples are inoculated with Staphylococcus and evaluated for percent reduction of the bacteria over selected contact periods of 1 - 24 hours. Turnaround Time is usually 5 days. The specimens were then incubated at a temperature 37 °C for a period of time of 24 hours. After the 24 hour incubation period, the samples were visually checked for the growth of bacteria.

The AATCC 147/100, Part III protocol provides a qualitative test for antifungal activity. Acrylic fiber/ fabric specimens were subjected to the growth of a common fungus, *Aspergillus niger,* on Sabouraud Dextrose agar. Pre-wet specimens were inoculated and incubated at 28 °C for seven days. Specimens were then assessed for growth of the fungus.

ASTM E2180-01 test method was used for testing inhibitory mold activity of the acrylic product (fiber /fabric) prepared in accordance with this invention.

All the specimen acrylic fiber and fabrics as obtained in examples 1 to 10 of the second set were tested for antimicrobial activity by following the above mentioned test protocols. The results of the above mentioned test protocols are provided in the following tables:

**Table 2**

| Antimicrobial Activity of Acrylic Fibers | |
|---|---|
| **Sr. No.** | **% kill of bacteria** |
| Example 1 | 99.8 |
| Microbe tested : S. aureus | |
| Example 2 | 100 |
| Microbe tested : S. aureus | |
| Example 3 | 100 |
| Microbe tested : E. coli | |
| Example 4 | 100 |
| Microbe tested : S. aureus | |
| Example 5 | 100 |
| Microbe tested : E. coli | |
| Example 7 | 100 |
| Microbe tested : S. aureus | |
| Example 8 | 100 |
| Microbe tested : S. aureus | |
| Example 9 | 100 |
| Microbe tested : S. aureus | |
| Example 10 | 100 |
| Microbe tested : S. aureus | |

**Table 3**

| Antimicrobial Activity of Acrylic Fabric | |
|---|---|
| **Sr. No.** | **% kill of bacteria** |
| Example 1 | 99.8 |
| Microbe tested : S. aureus | |
| Example 2 | 100 |
| Microbe tested : S. aureus | |
| Example 3 | 100 |
| Microbe tested : E. coli | |
| Example 4 | 100 |
| Microbe tested : S. aureus | |
| Example 5 | 100 |
| Microbe tested : E. coli | |
| Example 7 | 100 |
| Microbe tested : S. aureus | |
| Example 8 | 100 |
| Microbe tested : S. aureus | |
| Example 9 | 100 |
| Microbe tested : S. aureus | |
| Example 10 | 100 |
| Microbe tested : S. aureus | |

The acrylic fiber and fabric acrylic fabric specimens obtained in examples 6 and 9 of the second set contained antifungal agent and their antifungal activity was determined by AATCC 147 part III and in case of the all the specimens no fungal growth was observed meaning that all the specimen exhibited excellent antifungal activity. Furthermore, inhibitory mould activity of this specimen was tested by ASTM E 2180-01 test protocol and good inhibitory activity against Aspergillus niger was recorded.

The test fabrics made from these fibers thus exhibited significant antimicrobial activity both towards bacteria and fungi.

### 10. Perfume retension test:

Twenty pieces of standard size 20cmX20cm cut out from the freshly prepared acrylic fiber as prepared in accordance with examples of the third set. Another set of Twenty pieces of the same size cut out of from the same fiber were subjected to 20 hot water washes with the intermittent drying period of 2 hrs. The drying was carried out in natural sunlight at temperature within the range of 25 to 45°C. The specimens so prepared were randomly distributed to human subjects for testing the aroma of the specimen. The specimen was interchanged amongst the subjects. No noticeable difference in odor of the two respective acrylic fiber specimens was reported and therefore it is concluded that the acrylic fiber specimen retained the perfume additive even after exposure to varying conditions.

While considerable emphasis has been placed herein on the specific steps of the preferred embodiment, it will be appreciated that many alterations can be made and that many modifications can be made in the preferred embodiment without departing from the principles of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A formulation meant for manufacture of acrylic products comprising:
• at least one water insoluble constituent, in the form of micro-reservoirs having an average mean size of 5 nm to 2000 nm, said constituent selected from the group consisting of thermoregulatory constituents in an amount of 0.01 to 7%, antimicrobial constituents in an amount of 0.001 to 3.5% and perfume constituents in an amount of 0.001 to 3.5%, said amounts being expressed with respect to the total mass of the formulation;
• at least one water soluble nonionic surfactant having HLB value in the range of 9 to 40,said surfactant being in the range of 0.001 to 3 % of the mass of the formulation,
• acrylic polymer in the range of 1 to 15% of the mass of the formulation,
• a solvent for polyacrylonitrile in the range of 20 to 60% of the mass of the formulation;
• water in the range of 5 % to 60 % of the mass of the formulation, and
• in the case when the water insoluble constituent is an antimicrobial constituent or a perfume constituent, at least one non-aqueous solvent in the range of 0.01 to 7% of the mass of the formulation.

2. A formulation as claimed in claim 1, wherein the water insoluble constituent is a thermoregulatory constituent having a melting point in the range where the thermoregulatory effect is desired, in the range of 0.01 to 7% of the mass of the formulation.

3. A formulation as claimed in claim 2, wherein the thermoregulatory constituent is at least one selected from a group consisting of nonadecane, eicosane, heptadecane, octadecane, pentadecane, hexadecane, decyl alcohol, lauryl alcohol and myristyl alcohol.

4. A formulation as claimed in claim 1, wherein the surfactant is at least one non-ionic surfactant selected from the group of alkyl phenoxy ethoxylated non-ionic surfactants which include Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) (nonylphenol 9.5-mole ethoxylate), Surfonic N-95(Poly (oxy-1, 2-ethanediyl), alpha- (nonyl phenyl)-omega-hydroxyl-glycol ether) (nonylphenol 9.5-mole ethoxylate), Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300(nonylphenol 30-mole ethoxylate), Surfonic N-400 nonylphenol 40-mole ethoxylate, Surfonic LF-7 (Alkyl polyoxyalkylene ether), Surfonic LF-17 (ethoxylated and propoxylated linear primary 12-14 carbon number alcohol), Igepal CO-630 (nonylphenoxy poly(ethyleneoxy)ethanol, branched), Surfonic DNP-40 (dinonylphenol ethoxylate glycol ether); ethoxylated alkyl alcohol surfactants, Polyethylene-block-Poly propylene glycol-block-polyethylene glycol and Ethylenediamine tetrakis(propylene oxide-block-ethylene oxide) tetrol.

5. A formulation as claimed in claim 1, wherein the preferred HLB value of the surfactant is between 16 and 40.

6. A thermoregulatory acrylic product being at least one product selected from the group consisting of fiber, yarn and fabric manufactured from a formulation as claimed in claim 2.

7. A formulation as claimed in claim 1, wherein the formulation is an antimicrobial acrylic formulation comprising:
■ at least one non-aqueous solvent in the range of 0.01 to 7% of the mass of the formulation,
■ at least one water insoluble antimicrobial constituent soluble said solvent, in the range of 0.001 to 3.5% of the mass of the formulation,
■ at least one water soluble surfactant having HLB value in the range of 9 to 40, in the range of 0.001 to 3% of the mass of the formulation,
■ a solvent for acrylic polymer in the range of 20 to 60% of the mass of the formulation,
■ acrylic polymer in the range of 1 to 15% of the mass of the formulation, and
■ water in the range of 5% to 60 % with respect to the mass of the formulation.

8. A formulation as claimed in claim 1 or 7, wherein the antimicrobial constituent is at least one selected from a group consisting of 2-Methyl-4-isothiazolin-3-one, Phenoxyethanol, Benzoic acid 4-Hydroxy-methyl ester, Hydroxy-benzoic acid propyl ester, o- (2-naphthyl) methyl (3-methylphenyl) thiocarbamate, 5-chloro-2-(2,4-dichlorophenoxy)phenol, 4,5-dichloro-n-octyl-4-isothiazoline-3-one[DCOIT], 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

9. A formulation as claimed in claim 7, wherein the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

10. An antimicrobial acrylic product selected from the group consisting of fiber, yarn and fabric manufactured from a formulation as claimed in claim 7.

11. A formulation as claimed in claim 1, wherein the formulation is a perfumed acrylic formulation comprising:
■ at least one non-aqueous solvent in the range of 0.01 to 7% of the mass of the formulation,
■ at least one water insoluble perfume constituent soluble said solvent, in the range of 0.001 to 3.5% of the mass of the formulation,
■ at least one water soluble nonionic surfactant having HLB value in the range of 9 to 40, in the range of 0.001 to 3% of the mass of the formulation,
■ a solvent for polyacrylonitrile in the range of 20 to 60% of the mass of the formulation,
■ acrylic polymer in the range of 1 to 15% of the mass of the formulation; and
■ water in the range of 5% to 60 % with respect to the mass of the formulation.

12. A formulation as claimed in claim 11, wherein the perfume constituent is at least one selected from a group consisting of citrus musk, floral woody, citrus musk woody, fresh bouquet, musk, floral musk, lavender oil, jasmine oil, rose oil, cedarwood oil, sandalwood oil, orange oil and lemon oil.

13. A formulation as claimed in claim 11, wherein the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

14. A perfumed acrylic product selected from the group consisting of fiber, yarn and fabric manufactured from a formulation as claimed in claim 11.

15. A process of preparation of a formulation meant for manufacture of acrylic products as claimed in claim 1, comprising the following steps:
• selecting a non-water-soluble constituent from the group consisting of thermoregulatory constituents, antimicrobial constituents and perfume constituents, mixing with at least one non-aqueous solvent in the case of antimicrobial constituents and perfume constituents and heating said constituent upto 95°C to form a non-aqueous phase;
• dissolving and stirring at least one water soluble nonionic surfactant having HLB value in the range of 9 to 40, optionally with a co-surfactant, a solvent for acrylic polymer in water to obtain an aqueous phase;
• heating the aqueous phase;
• mixing the aqueous phase with the non-aqueous phase in liquid state to form an admixture, and homogenizing to obtain a micro-emulsion; and
• mixing the micro-emulsion with an acrylic polymer solution in a solvent and water and further homogenizing and dispersing the micro-emulsion to obtain a preform mass wherein the water insoluble constituent is in the form of evenly dispersed micro-reservoirs

## Patentansprüche

1. Eine Rezeptur für die Herstellung von Acrylprodukten, bestehend aus Folgendem:
• mindestens einem wasserunlöslicher Bestandteil in Form von Mikroreservoirs mit einem durchschnittlichen Mittelmaß von 5 nm bis 2000 nm; besagter Bestandteil aus der Gruppe, die zu 0,01 bis 7% aus thermoregulatorischen Bestandteilen, zu 0,001 bis 3,5% aus antimikrobiellen Bestandteilen und zu 0,001 bis 3,5% aus Duftstoffen besteht, gewählt ist; besagte Mengen werden hinsichtlich der Gesamtmasse der Rezeptur ausgedrückt;
• mindestens einem wasserlöslichen nichtionischen oberflächenaktiven Stoff, mit einem HLB-Wert von 9 bis 40; besagtem oberflächenaktiven Stoff befindet sich im Bereich von 0,001 bis 3% der Rezepturmasse,
• Acrylpolymer im Bereich von 1 bis 15% der Rezepturmasse,
• ein Lösungsmittel für Polyacrylnitril im Bereich von 20 bis 60% der Rezepturmasse;
• Wasser im Bereich von 5% bis 60% der Rezepturmasse, und
• für den Fall, dass der wasserunlösliche Bestandteil ein antimikrobieller Bestandteil oder ein Duftstoff ist, mindestens ein nichtwässriges Lösungsmittel im Bereich von 0,01 bis 7% der Rezepturmasse.

2. Eine Rezeptur nach Anspruch 1, wobei der wasserunlösliche Bestandteil ein thermoregulatorischer Bestandteil ist, dessen Schmelzpunkt in einem Bereich liegt, wo der thermoregulatorische Effekt im Bereich von 0,01 bis 7% der Rezepturmasse verlangt ist.

3. Eine Rezeptur nach Anspruch 2, wobei der thermoregulatorische Bestandteil zumindest ein Bestandteil aus einer Gruppe, die aus Nonadecan, Eicosan, Heptadecan, Octadecan, Pentadecan, Hexadecan, Decylalkohol, Laurylalkohol und Myristylalkohol besteht, gewählter ist.

4. Eine Rezeptur nach Anspruch 1, wobei der oberflächenaktiven Stoff zumindest ein nichtionische oberflächenaktiven Stoff ist, welcher aus der Gruppe von Alkylphenol-Ethoxylaten nichtionischen oberflächenaktiven Stoffen gewählt wird, die Folgendes beinhaltet: Polyoxyethylen (8) Isooctyl-Phenyl Ether, Nonyl-Phenol-Polyethylen-GlykolEther, Polyoxyethylen (9) Nonyl-Phenyl Ether, Polyoxyethylen (10) Isooctyl-Phenyl Ether, Polyoxyethylen (12) Nonyl-Phenyl Ether, Polyoxyethylen (12) Isooctyl-Phenyl Ether, Polyoxyethylen (40) Nonyl-Phenyl Ether, Polyoxyethylen (40) Isooctyl-Phenyl Ether, Polyoxyethylen (100) Nonyl-Phenyl Ether, Polyoxyethylen (150) Di-Nonylphenyl Ether, Surfonic N-95 (Poly(oxy-1, 2-ethanediyl), Alpha-(Nonyl-Phenyl)-Omega-Hydroxyl-Glykolether) (Nonyl-Phenol 9.5 Mol Ethoxylat), Surfonic N-95 (Poly (oxy-1, 2-ethanediyl), Alpha- (Nonyl-Phenyl)-Omega-Hydroxyl-Glykolether) (Nonyl-phenol 9.5 Mol Ethoxylat), Surfonic N-120 (Nonyl-Phenol 12 Mol Ethoxylat), Surfonic N-150 (Nonyl-Phenol 15 Mol Ethoxylat), Surfonic N-200 (Nonyl-Phenol 20 Mol Ethoxylat), Surfonic N-300 (Nonyl-Phenol 30 Mol Ethoxylat), Surfonic N-400 Nonyl-Phenol 40 Mol Ethoxylat, Surfonic LF-7 (Alkyl Polyoxyalkylen Ether), Surfonic LF-17 (Ethoxylierte und propoxylierte lineare, primäre 12-14 Kohlenstoffzahl Alkohol), Igepal CO-630 (Nonyl-Phenoxy Poly(ethylenoxid) Ethanol, verzweigt), Surfonic DNP-40 (Di-Nonylphenol Ethoxylat Glykolether); Ethoxylierte Alkyl-Alkohol- oberflächenaktive Stoffe, Polyethylenblock-Poly Propylen Glykolblock-Polyethylen Glykol und Ethylendiamin Tetrakis(propylen Oxidblock-Ethylen Oxid)tetrol.

5. Eine Rezeptur nach Anspruch 1, wobei der bevorzugte HLB-Wert des oberflächenaktives Stoffs zwischen 16 und 40 liegt.

6. Ein thermoregulatorisches Acrylprodukt, von dem mindestens ein Produkt aus der Gruppe gewählt wird, die aus Textilfaser, Garn und Stoff besteht, welcher aus einer Rezeptur nach Anspruch 2 hergestellt wird.

7. Eine Rezeptur nach Anspruch 1, wobei die Rezeptur eine antimikrobielle Acrylrezeptur ist, bestehend aus Folgendem:
• mindestens ein nichtwässriges Lösungsmittel im Bereich von 0,01 bis 7% der Rezepturmasse.
• mindestens ein wasserunlöslicher antimikrobieller Bestandteil auflösbar in besagtem Lösungsmittel im Bereich von 0,001 bis 3,5% der Rezepturmasse.
• mindestens ein wasserlösliches oberflächenaktives Stoff , das einen HLB-Wert von 9 bis 40 hat und im Bereich von 0,001 bis 3% der Rezepturmasse liegt,
• ein Lösungsmittel für Acrylpolymer im Bereich von 20 bis 60% der Rezepturmasse,
• Acrylpolymer im Bereich von 1 bis 15% der Rezepturmasse, und
• Wasser im Bereich von 5% bis 60% hinsichtlich der Rezepturmasse.

8. Eine Rezeptur nach Anspruch 1 oder 7, wobei der antimikrobielle Bestandteil mindestens ein gewählter Bestandteil von einer Gruppe ist, welche aus Folgendem besteht: 2-Methyl-4-isothiazolin-3-one, Phenoxyethanol, 4-Hydroxybenzoesäuremethylester, Hydroxybenzoesäurepropylester, o-(2-Naphthyl) Methyl (3-Methyl-Phenyl) Thiocarbamat, 5-Chloro-2-(2,4-Dichlorphen Oxid)phenol, 4,5-Dichlor-Noctyl-4-Isothiazolin-3-one [DCOIT], 2-n-octyl-4-isothiazolin-3-one, 1-Phenoxy Propan-2-ol, Pentachlorphenol, 5-Chlor-2-Dichlor-Phenoxy Phenol, Clotrimazol, P-Chlor-m-xylenol und Chlorquinaldol.

9. Eine Rezeptur nach Anspruch 7, wobei das Lösungsmittel zumindest ein gewähltes Lösungsmittel aus einer Gruppe von Lösungsmitteln ist, welche aus Folgendem besteht: C₁₀-C₄₄ Alkane (paraffinische Kohlenwasserstoffe), Polyethylen, Polypropylen, Polypropylen Glykol, Polytetramethylen Glykol, Polypropylen Malonat, Polyneopentyl Glykol Sebacat, Polypentan Glutarat, Polyvinyl Myristat, Polyvinyl Stearat, Polyvinyl Laurat, Poly Hexadecyl Methacrylat, Poly Octadecyl Methacrylat, Polyethylen Oxide, Polyethylen Glykole, Arachidyl Alkohol, Behenyl Alkohol, Selachyl Alkohol, Chimimyl Alkohol, Polyester, Di-Iso Decyl Phthalat, Benzyl Alkohol, C₄ -C₃₀ Aliphatische Alkohole, C₄ -C₃₀ gesättigte Kohlenwasserstoffe, C₄ -C₃₀ einfach ungesättigte Kohlenwasserstoffe, natürliche Öle und Mineralöl-Paraffine.

10. Ein antimikrobielles Acrylprodukt, das aus der Gruppe gewählt wird, welche aus Textilfaser, Garn und Stoff besteht, der aus einer Rezeptur nach Anspruch 7 hergestellt wird.

11. Eine Rezeptur nach Anspruch 1, wobei die Rezeptur eine parfümierte Acrylrezeptur ist, bestehend aus Folgendem:
• mindestens ein nichtwässriges Lösungsmittel im Bereich von 0,01 bis 7% der Rezepturmasse.
• mindestens ein wasserunlösliches Parfümbestandteil auflösbar in besagtem Lösungsmittel im Bereich von 0,001 bis 3,5% der Rezepturmasse,
• mindestens ein wasserlösliches nichtionisches oberflächenaktives Stoff , das einen HLB-Wert von 9 bis 40 hat und im Bereich von 0,001 bis 3% der Rezepturmasse liegt,
• ein Lösungsmittel für Polyacrylonitril im Bereich von 20 bis 60% der Rezepturmasse,
• Acrylpolymer im Bereich von 1 bis 15% der Rezepturmasse; und
• Wasser im Bereich von 5% bis 60% bezüglich der Rezepturmasse.

12. Eine Rezeptur nach Anspruch 11, wobei der Parfümbestandteil mindestens ein gewählter Bestandteil aus einer Gruppe ist, die aus Folgendem besteht: Zitrus-Moschus, floral-holzig, Zitrus-Moschus holzig, frisches Bouquet, Moschus, floraler Moschus, Lavendelöl, Jasminöl, Rosenöl, Zedernholzöl, Sandelholzöl, Orangenöl und Zitronenöl.

13. Eine Rezeptur nach Anspruch 11, wobei das Lösungsmittel mindestens ein Lösungsmittel ist, welches aus einer Gruppe von Lösungsmitteln gewählt wird, die aus Folgendem besteht: C₁₀-C₄₄ Alkane (paraffinische Kohlenwasserstoffe), Polyethylen, Polypropylen, Polypropylen Glykol, Polytetramethylen Glykol, Polypropylen Malonat, Polyneopentyl Glykol Sebacat, Polypentan Glutarat, Polyvinyl Myristat, Polyvinyl Stearat, Polyvinyl Laurat, Polyhexadecyl Methacrylat, Polyoctadecyl Methacrylat, Polyethylen Oxide, Polyethylen Glykole, Arachidyl Alkohol, Behenyl Alkohol, Selachyl Alkohol, Chimimyl Alkohol, Polyester, Di-Iso Decyl Phthalat, Benzyl Alkohol, C₄ -C₃₀ Aliphatische Alkohole, C₄ -C₃₀ gesättigte Kohlenwasserstoffe, C₄ -C₃₀ einfach ungesättigte Kohlenwasserstoffe, natürliche Öle und Mineralöl-Paraffine.

14. Ein parfümiertes Acrylprodukt, das aus der Gruppe gewählt wird, welche aus Textilfaser, Garn und Stoff besteht, der aus einer Rezeptur nach Anspruch 11 hergestellt wird.

15. Ein Vorbereitungsprozess einer Rezeptur, der für die Herstellung von Acrylprodukten nach Anspruch 1 bestimmt ist, beinhaltet die folgenden Schritte:
• Auswahl eines nichtwasserlöslichen Bestandteils aus der Gruppe, bestehend aus thermoregulierenden Bestandteilen, antimikrobiellen Bestandteilen und Duft-Bestandteilen; Mischung mit mindestens einem nichtwässrigen Lösungsmittel im Fall von antimirobiellen Bestandteilen und Duft-Bestandteilen und Erwärmung besagter Bestandteile auf 95°C, um eine nichtwässrige Phase zu bilden;
• Auflösung und Vermischung mindestens eines wasserlöslichen nichtionischen oberflächenaktives Stoffs , das einen HLB-Wert von 9 bis 40 hat, wahlweise mit einem Ko- oberflächenaktiven Stoff , einem Lösungsmittel für Acrylpolymer, im Wasser, um eine wässrige Phase zu erreichen;
• Erwärmung in der wässrigen Phase;
• Mischung der wässrigen Phase mit der nichtwässrigen Phase im flüssigen Zustand, um eine Beimischung zu bilden und Homogenisierung, um eine Mikroemulsion zu erhalten; und
• Mischung der Mikroemulsion mit einer Acrylpolymerlösung in einem Lösungsmittel und Wasser und weiteres Homogenisieren und Dispergieren der Mikroemulsion, um eine Vorform-Masse zu erhalten, worin der wasserunlösliche Bestandteil in der Form von gleichmäßigen dispergierten Mikroreservoirs vorhanden ist.

## Revendications

1. Une formulation destinée à la fabrication de produits acryliques comprenant :
• au moins un constituant insoluble dans l'eau, sous la forme de microréservoirs possédant une taille moyenne comprise entre 5 nm et 2000 nm, ledit constituant choisi dans le groupe constitué des constituants de thermorégulation en une quantité comprise entre 0,01 et 7%, des constituants antimicrobiens en une quantité comprise entre 0,001 et 3,5% et des constituants de parfum en une quantité comprise entre 0,001 et 3,5%, lesdites quantités étant exprimées par rapport à la masse totale de la formulation ;
• au moins un tensioactif non ionique soluble dans l'eau ayant une valeur HLB dans l'échelle de 9 à 40, ledit tensioactif étant compris entre 0,001 et 3% de la masse de la formulation,
• de l'acrylique polymère en une quantité comprise entre 1 et 15% de la masse de la formulation,
• un solvant pour poly acrylonitrile compris entre 20 et 60% de la masse de la formulation ;
• de l'eau en une quantité comprise entre 5% et 60% de la masse de la formulation, et
• lorsque le constituant insoluble dans l'eau est un constituant antimicrobien ou un constituant de parfum, au moins un solvant non aqueux en une quantité comprise entre 0,01 et 7% de la masse de la formulation.

2. Une formulation selon la revendication 1, dans laquelle le constituant insoluble dans l'eau est un constituant de thermorégulation ayant un point de fusion dans le domaine où l'effet de thermorégulation est désiré, en une quantité comprise entre 0,01 et 7% de la masse de la formulation.

3. Une formulation selon la revendication 2, dans laquelle le constituant de thermorégulation est un constituant choisi au moins parmi le groupe constitué de nonadécane, éicosane, heptadécane, octadécane, pentadécane, hexadécane, alcool décylique, alcool laurylique et alcool myristylique.

4. Une formulation selon la revendication 1, dans laquelle le tensioactif est au moins un tensioactif non ionique choisi parmi les tensioactifs non ioniques du groupe alkyle phénoxy éthoxylé incluant l'éther polyoxyéthylène(8) isooctylphénylique, l'éther polyéthylène-glycol de nonylphénol, l'éther polyoxyéhylène(9) nonylphénylique, l'éther polyoxyéthylène(10) isooctylphénylique, l'éther polyoxyéthylène(12) nonylphénylique, l'éther polyoxyéthylène(12) isooctylphénylique, l'éther polyoxyéthylène(40) nonylphénylique, l'éther polyoxyéthylène(40) isooctylphénylique, l'éther polyoxyéthylène(100) nonylphénylique, l'éther polyoxyéthylène(150) dinonylphénylique, le Surfonic N-95(Poly (oxy-1, 2-éthanediyle), alpha- (nonylphényle)-oméga-hydroxyle-glycol éther) (éthoxylate de nonylphénol 9,5 moles), le Surfonic N-95(Poly (oxy-1, 2-éthanediyle), alpha-(nonylphényle)-oméga-hydroxyle-glycol éther) (éthoxylate de nonylphénol 9,5 moles), le Surfonic N-120(éthoxylate de nonylphénol 12 moles), le Surfonic N-150 (éthoxylate de nonylphénol 15 moles), le Surfonic N-200 (éthoxylate de nonylphénol 20 moles), le Surfonic N-300(éthoxylate de nonylphénol 30 moles), le Surfonic N-400 éthoxylate de nonylphénol 40 moles, le Surfonic LF-7 (éther de polyoxyalkylène alkyle), le Surfonic LF-17 (alcool nombre de carbone 12 à 14 primaire linéaire éthoxylé et propoxylé), l'Igepal CO-630 (nonylphénoxy poly(éthylèneoxy)éthanol, ramifié), le Surfonic DNP-40 (éther glycolique de dinonylphénol éthoxylé) ; des tensioactifs d'alcool alkylique éthoxylés, polyéthylène-bloc-poly propylène glycol-bloc-polyéthylène glycol et l'éthylène diamine tétrakis(propylène oxyde-bloc-oxyde d'éthylène) tétrol.

5. Une formulation selon la revendication 1, dans laquelle la valeur HLB préférée du tensioactif est comprise entre 16 et 40.

6. Un produit acrylique thermorégulateur étant au moins un produit choisi dans le groupe constitué de fibres, fils et tissus fabriqués à partir d'une formulation selon la revendication 2.

7. Une formulation selon la revendication 1, dans laquelle la formulation est une formulation acrylique antimicrobienne comprenant :
• au moins un solvant non-aqueux compris entre 0,01 et 7% de la masse de la formulation,
• au moins un constituant antimicrobien insoluble dans l'eau soluble dans ledit solvant, en une quantité comprise entre 0,001 et 3,5% de la masse de la formulation,
• au moins un tensioactif soluble dans l'eau ayant une valeur HLB dans l'échelle de 9 à 40, en une quantité comprise entre 0,001 et 3% de la masse de la formulation,
• un solvant pour polymère acrylique en une quantité comprise entre 20% et 60% de la masse de la formulation,
• du polymère acrylique en une quantité comprise entre 1 et 15% de la masse de la formulation, et
• de l'eau en une quantité comprise entre 5% et 60% par rapport à la masse de la formulation.

8. Une formulation selon les revendications 1 ou 7, dans laquelle le constituant antimicrobien est au moins un constituant choisi dans le groupe constitué de 2-méthyl-4-isothiazoline-3-une, phénoxyéthanol, ester d'acide benzoïque 4-hydroxy-méthyl, ester propylique hydroxy benzoïque, o- (2-naphtyle) méthyl (3-méthylphényle) thiocarbamate, 5-chloro-2-(2,4-dichlorophénoxy)phénol, 4,5-dichloro-n-octyle-4-isothiazoline-3-une [DCOIT], 2-n-octyle-4-isothiazoline-3-une, 1-phénoxy propane-2-ol, pentachlorophénol, 5-chloro-2-dichlorophénoxy phénol, clotrimazole, p-chloro-m-xylénol et chloroquinaldol.

9. Une formulation selon la revendication 7, dans laquelle le solvant est au moins un solvant choisi dans le groupe de solvants constitué d'alcanes C₁₀-C₄₄ (hydrocarbures paraffiniques), de polyéthylène, de polypropylène, de glycol polypropylénique, de glycol polytétraméthylène, de malonate polypropylène, de sébacate de glycol polynéopentyle, de glutarate de polypentane, de myristate de polyvinyle, de stéarate de polyvinyle, de laurate de polyvinyle, de méthacrylate de polyhexadécyle, de méthacrylate polyoctadécyle, des oxydes de polyéthylène, des polyéthylène glycols, de l'alcool arachidylique, de l'alcool béhénylique, de l'alcool sélachyle, de l'alcool chimimyle, des polyesters, de phtalate décyle di-iso, de l'alcool benzylique, des alcools aliphatiques C4 -C30, des hydrocarbures saturés C4 -C30, des hydrocarbures mono insaturés C₄ -C₃₀, des huiles naturelles et des paraffines d'huile minérale.

10. Un produit acrylique antimicrobien choisi dans le groupe constitué de fibres, fils et tissus fabriqués à partir d'une formulation selon la revendication 7.

11. Une formulation selon la revendication 1, dans laquelle la formulation est une formulation acrylique parfumée comprenant :
• au moins un solvant non-aqueux compris entre 0,01 et 7% de la masse de la formulation,
• au moins un constituant de parfum insoluble dans l'eau soluble dans ledit solvant, en une quantité comprise entre 0,001 et 3,5% de la masse de la formulation,
• au moins un tensioactif non ionique soluble dans l'eau ayant une valeur HLB dans l'échelle de 9 à 40, compris entre 0,001 et 3% de la masse de la formulation,
• un solvant pour poly acrylonitrile compris entre 20 et 60% de la masse de la formulation,
• du polymère acrylique compris entre 1 et 15% de la masse de la formulation ; et
• de l'eau en une quantité comprise entre 5% et 60% par rapport à la masse de la formulation.

12. Une formulation selon la revendication 11, dans laquelle le constituant de parfum est au moins un constituant choisi dans le groupe constitué d'agrume musqué, de floral boisé, d'agrume musqué boisé, de bouquet frais, de musc, de foral musqué, d'huile de lavande, d'huile de jasmin, d'huile de rose, d'huile de bois de cèdre, d'huile de bois de santal, d'huile d'orange et d'huile de citron.

13. Une formulation selon la revendication 11, dans laquelle le solvant est au moins un solvant choisi dans le groupe de solvants constitué d'alcanes C10-C44 (hydrocarbures paraffiniques), de polyéthylène, de polypropylène, de glycol polypropylénique, de glycol polytétraméthylène, de malonate polypropylène, de sébacate de glycol polynéopentyle, de glutarate de polypentane, de myristate de polyvinyle, de stéarate de polyvinyle, de laurate de polyvinyle, de méthacrylate polyhexadécyle, de méthacrylate polyoctadécyle, des oxydes de polyéthylène, des polyéthylène glycols, de l'alcool arachidylique, de l'alcool béhénylique, de l'alcool sélachyle, de l'alcool chimimyle, des polyesters, de phtalate de décyle di-iso, de l'alcool benzylique, des alcools aliphatiques C4 -C30, des hydrocarbures saturés C4 -C30, des hydrocarbures mono insaturés C₄ -C₃₀, des huiles naturelles et des paraffines d'huile minérale.

14. Un produit acrylique parfumé choisi dans le groupe constitué de fibres, fils et tissus fabriqués à partir d'une formulation selon la revendication 11.

15. Un processus de préparation d'une formulation destinée à la fabrication de produits acryliques selon la revendication 1, comprenant les étapes suivantes :
• la sélection d'un constituant non soluble dans l'eau à partir du groupe constitué de constituants de thermorégulation, de constituants antimicrobiens et de constituants de parfum, le mélange avec au moins un solvant non aqueux dans le cas des constituants antimicrobiens et des constituants de parfum et le chauffage dudit constituant à une température pouvant atteindre 95°C pour former une phase non aqueuse ;
• la dissolution et l'agitation d'au moins un tensioactif non ionique soluble dans l'eau ayant une valeur HLB dans l'échelle de 9 à 40, éventuellement avec un co-tensioactif, un solvant pour polymère acrylique dans l'eau pour obtenir une phase aqueuse ;
• le chauffage de la phase aqueuse ;
• le mélange de la phase aqueuse avec la phase non aqueuse à l'état liquide pour former un mélange, et l'homogénéisation pour obtenir une microémulsion ; et
• le mélange de la microémulsion avec une solution de polymère acrylique dans un solvant et de l'eau et ensuite l'homogénéisation et la dispersion de la microémulsion pour obtenir une masse préforme dans laquelle le constituant insoluble dans l'eau est sous la forme d'une répartition régulière des microréservoirs.
